(19) Europäisches Patentamt / European Patent Office / Office européen des brevets

(11) **EP 4 667 879 B1**

(12) **EUROPEAN PATENT SPECIFICATION**

(45) Date of publication and mention of the grant of the patent:
**11.03.2026  Bulletin 2026/11**

(21) Application number: **24020200.2**

(22) Date of filing: **17.06.2024**

(51) International Patent Classification (IPC):
*G01F 1/20* (2006.01)    *G01F 1/80* (2006.01)
*G01F 5/00* (2006.01)    *G01F 7/00* (2006.01)

(52) Cooperative Patent Classification (CPC):
**G01F 1/206; G01F 1/80; G01F 5/00; G01F 7/00**

(54) **METHOD OF MODULATING THE DEPENDENCE ON FLOW OF THE FORCE EXERTED ON THE REACTION ELEMENT IN THE STRUCTURE OF A FLOWMETER AND FLOWMETER WITH MODULATED REACTION CONFIGURED ON THE BASIS OF THE METHOD**

VERFAHREN ZUR MODULATION DER ABHÄNGIGKEIT DER AUF DAS REAKTIONSELEMENT AUSGEÜBTEN KRAFT VOM DURCHFLUSS IN DER STRUKTUR EINES DURCHFLUSSMESSERS UND DURCHFLUSSMESSER MIT MODULIERTER REAKTION, DER AUF DER GRUNDLAGE DIESES VERFAHRENS KONFIGURIERT IST

PROCÉDÉ DE MODULATION DE LA DÉPENDANCE AU DÉBIT DE LA FORCE EXERCÉE SUR L'ÉLÉMENT DE RÉACTION DANS LA STRUCTURE D'UN DÉBITMÈTRE ET DÉBITMÈTRE À RÉACTION MODULÉE CONFIGURÉ SUR LA BASE DU PROCÉDÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**24.12.2025  Bulletin 2025/52**

(73) Proprietor: **Motit, Horia Mihai**
**021142 Bucuresti (RO)**

(72) Inventor: **Motit, Horia Mihai**
**021142 Bucuresti (RO)**

(74) Representative: **Strenc, Alexandru Cristian**
**Strenc Solutions for Innovation S.R.L.**
**Str. Lujerului Nr. 6**
**Bloc 100 Sc. B Et 3, Apt. 56 Sector 6**
**06631 Bucharest (RO)**

(56) References cited:
**EP-A1- 4 001 856    EP-A1- 4 471 385**
**EP-A2- 3 588 016**

**Description**

The present invention refers to the technical solution for defining a functional method for modulating the dependence on the flow rate of the force exerted on the reaction element in the structure of a flowmeter, and its implementation through a block with a specific role called "modulation block" ', and the configuration of the structure of a reaction flowmeter, which, based on the new functional working principle, allows the measurement of the flow rate over much extended working ranges compared to those provided by the currently known technical solutions of flowmeters, practically for any working fluid in the industrial environment.

The physical-mathematical modelling that is the basis of the method involved in the implementation of the invention, supposes the univocal determination of the relationship between the measuring accuracy of the reaction flowmeter and the particularly extended range of the measurement range specific to the concrete application in which the flowmeter works, on the basis of which it can be designed - by establishing its profile - the Modulator that optimally responds to the turndown and accuracy requirements of the flowmeter to be configured.

In the considerations to follow, we are understanding by turndown, the ratio of upper-range value and lower-range value, parameter which is equally known as rangeablity.

In the state of the art, there are known methods of linearization the dependence, of a quadratic nature, between the flow rate measured by a flowmeter, and respectively the force developed on a reaction element in the structure of the flowmeter, thus called "reaction flowmeter".

Thus, in the patent document EP 23020258.2 "Functional method of linearization the dependence of the force exerted on the reaction element of a flowmeter, on the flow rate, and linear reaction flowmeter configured on the basis of that method", it is presented the technical solution of a method of direct functional linearization of the dependence of the force exerted on a reaction element in the structure of a flowmeter against the flow, and of its implementation through a block with a specific role called "linearizer", in the configuration of the structure of a reaction flowmeter, which, based on the new functional way of working, allows the precise measurement of the flow over longer ranges, by directly transforming the operation mode of the reaction element of the flowmeter, defined by the functional equation of the quadratic dependence between the reaction force and the measured mass flow, It ensures the modification of the role of a component parameter of the respective functional equation, from a constant parameter, to a variable parameter, proportional to the inverse of the measured flow rate, in this sense changing, in a correlated manner, the role and configuration of the outlet nozzle of the reaction element, from constant area nozzle in variable area nozzle, depending on the flow rate. Thus the 'linearizer' allows establishing an expression, inherently and directly linear, between the force exerted on the reaction element and the measured flow rate.

The solution defines the parameters of interrelation and connection with the other blocks in the structure of the flowmeter, which allow the insertion of the linearizer in the optimal construction of the reaction flowmeter.

The operating principle of the technical solution in the document in question implies an extension of the measurement range limited to a quadratic increase, by the feasibility of the functional elements, which implies a strictly linear dependence between the measured flow rate and the reaction force exerted on the reaction element.

In its turn, the patent document EP 4001856 "Reaction flowmeter without moving parts in individual, bypass and respectively extended configuration, and a method of flow measurement based on it", describes a technical solution of a reaction flowmeter in which it is achieved a linear or quasi-linear dependency between the output parameter of the flowmeter and the measured flow. Thus, a linearization solution is presented by means of a non-linear transformation cam of the reaction force (achieved in the opposite direction with the quadratic dependence of the reaction force against the flow rate) in the output parameter of the flowmeter so that it is linearised the dependence between the output parameter and the measured flow rate $Q_m$,

The solution in the patent document WO 9702470 (A1) - "A total momentum flowmeter" presents a linearization solution based on an installation consisting of two bent pipe elements connected to each other in an inverted relationship, so that a common measuring device of the reaction forces will detect the difference between the forces exerted on them. The installation also uses two sources of constant flow with opposite directions, located in parallel with the two pipes to linearize the dependence of the output parameter on the flow. The presented linearization solution is technically complicated, constructively cumbersome, assuming bends, being not a flowmeter in itself, but rather a complex flow measurement installation.

The solutions presented in the documents EP 4001856 and respectively WO 9702470 (A1) have the disadvantage that they start from the use of reaction elements whose geometric configuration maintains, constant with respect to the flow rate variation, both the area of the inlet nozzle of the reaction element and that of the outlet nozzle, the equation functional being of a quadratic dependence of the reaction force against the measured flow, which determines the obtaining a reduced value of the extension of the flow measurement range.

The technical problem solved by the present invention consists in the significant and flexible increase, depending on the needs, of the extension of turndown $T = Q_{m,Max}/Q_{m,Min}$ correlated with the precise flow measurement range by a reaction flowmeter, for a wide range of fluids, through "reaction modulation", achieved through a special block called "Modulation Block", which by establishing an optimal profile of the modulator as main part of that block, achieves the modulation of the functional equation of the non-linear dependence between the reaction force and the measured mass flow rate, which thus now changes, in a correlated manner, the role and the configuration of the outlet nozzle of the reaction element, from a constant-area nozzle to a variable-area nozzle depending on the flow rate..

The functional method of modulating the dependence on flow of the force exerted on the reaction element in the structure of a flowmeter, according to the invention, is based on the appropriate insertion in the structure of a reaction flowmeter, of a specific functional element called "Modulator" as a component part of a Modulation Block, which allows the establishment of a parameterized expression that can be "modulated", between the force exerted on the reaction element and the measured flow, depending on the extended ranges proposed for measuring the flow, correlated with the measurement accuracy imposed on the reaction flowmeter.

The premise of the proposed modulation consists in defining that profile of the "Modulator" which allows, on the one hand, the transformation of some parameters that define the functional equation of the reaction flowmeter, from the constant parameters, related to the reaction flowmeter solutions, into variable parameters depending on the measured flow rate, which allow the "intrinsic" modulation of the dependence relationship between the force exerted on the reaction element in the flowmeter structure and the measured flow rate, and on the other hand, the definition of the interrelationship and connection parameters with the other blocks in the flowmeter structure, which allow the insertion of the Modulator in the optimal construction of the reaction flowmeter.

The functional method of modulating the dependence on flow rate of the force exerted on the reaction element in the structure of a flowmeter and the reaction flowmeter configured based on the method, according to the invention, presents the following advantages

- the generality and flexibility of its application, for measuring a particularly wide range of fluid flow rate values, expressed by an extended range of turndown values $T = Q_{m,Max} / Q_{m,Min}$, potential to be measures;

- ensuring the capability of an optimally adequate measurement of the requested flow range, through an easy adaptation of the characteristics arising from the established functional equation, related to flowmeters with modulated reaction, configured according to it, respectively the modulation coefficient "n", rigorously established incrementally, potential from a wide range of values, correlated with the measurement accuracy $E_S$ (% o.f.s.) of the related sensor, intended for the measurement of the reaction force (moment), developed corresponding to the measured flow rate;

- the simplicity that characterizes the configuration of flowmeters with modulated reaction, made on its basis.

The reaction flowmeter configured based on the proposed modulation method has, in construction, a series of blocks and functional elements specific to a reaction flowmeter configured based on the linearization method of the dependence between the force exerted on the reaction element and the measured flow, a known solution in itself (EP 23020258.2)" Functional method of linearizing the dependence of the force exerted on the reaction element of a flowmeter, on the flow rate, and linear reaction flowmeter configured on the basis of that method", and the totally innovative solution of the outlet nozzle, of the variable area, from the reaction element, which contains a block called "Modulation Block". In order to effectively achieve a significant extension of the flow measurement ranges and to ensure an univocal dependence between this and the measurement accuracy imposed on the flowmeter, it was necessary to define the geometric profile of the Modulator and its functional - constructive coupling in the structure of the flowmeter. implicitly and the coupling of the reaction tube with a moment transducer that ensures by balancing the reaction moment, both its measurement and the angular positioning of the reaction element, implicitly of the plane of the measuring section with variable area outlet nozzle.

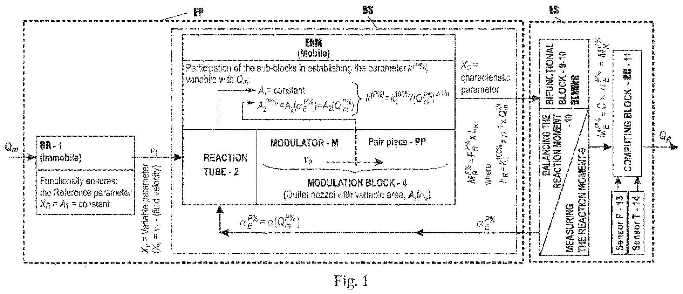

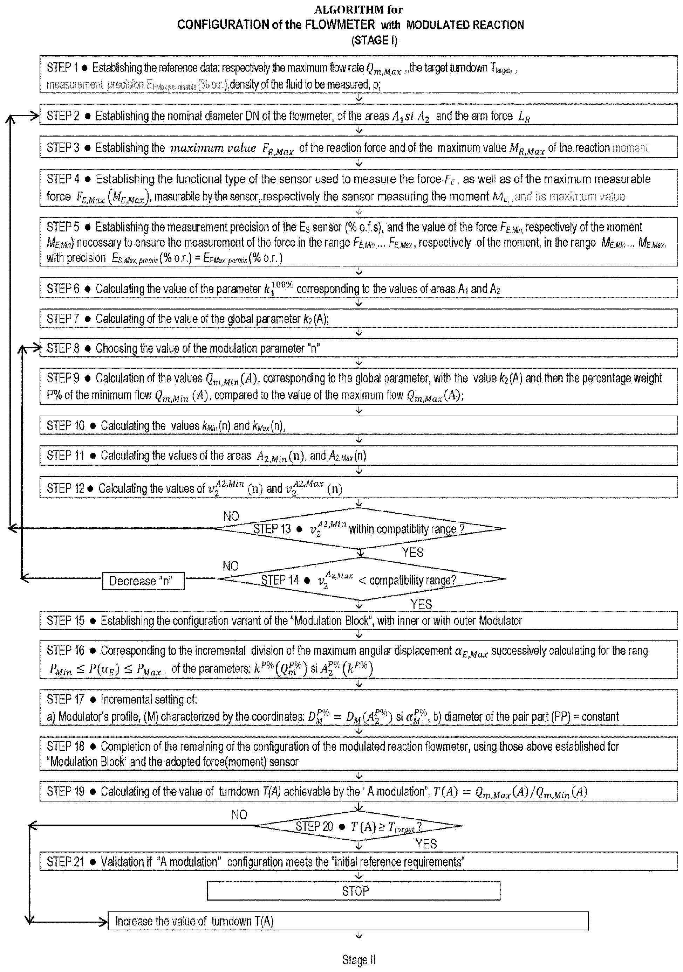

An embodiment of the invention is given next, in connection with figures 1...5, which represent:

Fig. 1. Basic structural diagram of reaction flowmeters, with modulation of the dependence on the flow rate of the reaction force exerted on the reaction element

Fig. 2. Algorithm of the functional method for modulating the dependence, in relation to the flow rate, of the force exerted on the reaction element in the structure of a flowmeter

Fig. 3. Scheme of the flowmeter with modulated reaction, made using a moment sensor, with its balancing by torsion of its sensitive element

Fig. 4. Presentation, through case examples, of the evolution of the functional curves of various types of reaction flowmeters, having the same reference data, but progressively increasing the value of their characteristic parameter "n"

Fig.5. Graphic presentation of the configuration of the functional curve of flowmeters with modulated, reaction by combining two reference functional curves, having the same value of the modulation parameter "n", but different values of parameter "$k_2$".

a. Overview
b. Detail of the transition zone from one reference curve to the other

It is specified that the embodiment of the invention considers the insertion of the Modulator in the structure, known in itself, of a flowmeter using a moment sensor, with balancing by elastic torsion.

The feasibility of the invention can be extended *mutatis mutandis* to the other known flowmeter structures that use sensors with gravimetric balancing, or with strain gauge, by moving their sensitive element, corresponding to ensuring the balancing of the reaction moment, related to stopping the rotation of the reaction tube at the balancing angle..

The method ensures, in an intrinsically functional way, the modulated dependence that can be both linear and non-linear on extended ranges of the measurement range, between the mass flow rate of the fluid to be measured $Q_m$ and the reaction force $F_R$, generated when it passes through the reaction element of flowmeter and applied to it, the dependence that also establishes the measurement mode of the force $F_R$, to determine the mass flow rate $Q_m$

By analogy with the state of the art regarding the linearization method (EP 23020258.2), this method provides for the successive completion of two stages, which start from the premise of establishing the analytical bases presented by its application algorithm, and have as their final point the definition of the basic structural scheme and of the basic configuration of the flowmeter, determined on the basis of the mentioned considerations, but in which the two stages have a specific original development, which results from the innovative application of the concept of modulation, which differs essentially in terms of functional and constructive aspect compared to the linear one.

The analytical foundation, in their logical sequence, of the specific steps of the method is based on the following considerations of a functional nature.

The functional equation of the reaction flowmeter currently known, which we call conventional non-linear reaction flowmeter:

$$F_R = k_1 \times \rho^{-1} \times Q_m^2 \qquad (1)$$

(Bibliographic reference 1)
where:

$F_R$ - reaction force;

$\rho$ - density of the fluid to be measured;

$Q_m$ - measured mass flow;

$k_1$ - constructive parameter = constant, expressed as :

$$k_1 = 1/A_2 + 0{,}5 \times (A_2/A_1^2 - 1/A_2) \qquad (2)$$

(Bibliographic reference 1)
where:

$A_1$ - exit area from the inlet connection of the flowmeter, respectively the entrance to the reaction tube;

$A_2$ - exit area from the reaction tube;

Additionally, the parameters that will be used in the following considerations are now presented, respectively:

$Q_m^{P(\%)}$ - value of the measured current mass flow, expressed, with reference to its percentage P(%) compared to the maximum flow rate $Q_m^{100\%}$, having the expression : $Q_m^{P(\%)} = P \times Q_m^{100\%}/100$ ;

$\alpha_E^{P(\%)} = \alpha_E(Q_m^{P(\%)})$ - the rotation angle of the reaction tube, corresponding to the balancing, by the moment transducer, of the reaction moment $M_R^{P(\%)} = F_R^{P(\%)} \times L_R$, of the reaction force $F_R^{P(\%)}$ ( having the arm $L_R$ ),

generated by the mass flow $Q_m^{P(\%)}$ ;

Implicitly, this angle $\alpha_E^{P(\%)} = \alpha_E(Q_m^{P(\%)})$ is also the rotation angle of the sensitive element of the moment transducer, corresponding to it, developing the balancing moment $M_E^{P(\%)} = c \times \alpha_E^{P(\%)}$ (where c - constructive constant), ensures the measuring of the reaction moment $M_R^{P(\%)}$ by its balancing, respectively $M_E^{P(\%)} = M_R^{P(\%)}$

In a specific innovative way, this method further provides for the "modulation of parameter k", by changing its role, and transforming it from a parameter $k_1$= constant, according to expression (2), into one that is variable with respect to the flow rate, corresponding to the modulation parameter "n", according to the relationship;

$$k^{P(\%)} = k_1^{100\%} \times \left[Q_m^{P(\%)}\right]^{-(2-1/n)} \tag{3}$$

where:

n - modulation parameter, real number.

$Q_m^{100\%}$ - maximum flow rate.

$k_1^{100\%}$ - value of the parameter $k_1$ coresponding to maximum flow rate,

Next, the functional equation of the flowmeters with modulated reaction is established, which implies ensuring, functionally - constructively, of the value $k^{p\%}$ according to expression (3) which, in its turn, determines the realization of the dependence between $F_R$ and $Q_m$, by replacing in relation (1) of the parameter $k_1$, with $k^{p\%}$, respectively:

$$F_R^{P\%} = k_1^{100\%} \times \rho^{-1} \times \left[Q_m^{P(\%)}\right]^{-\left(2-\frac{1}{n}\right)+2}$$

Thus, it results the expression:

$$F_R^{P\%} = k_1^{100\%} \times \rho^{-1} \times (Q_m^{P\%})^{1/n} \tag{4}$$

When a moment sensor provides the measurement of the moment $M_E^{P\%}$, of the balancing of the reaction moment, respectively $M_E^{P\%} = M_R^{P\%} = F_R^{P\%} \times L_R$ (corresponding the reaction force $F_R^{P\%}$, having the arm force $L_R$), by replacing $F_R^{P\%} = M_R^{P\%}/L_R$ in equation (4), it becomes:

$$M_E^{P\%} = L_R \times k_1^{100\%} \times \rho^{-1} \times (Q_m^{P\%})^{1/n} \tag{5}$$

By processing the relationship (5), it results the equation :

$$Q_m^{P\%} = [k_2 \times (M_E^{P\%})]^n \tag{6}$$

where the global parameter $k_2$, has the expression :

$$k_2 = \rho/(L_R \times k_1^{100\%}) \tag{7}$$

Relations (5) and (6) express the assurance of the modulated dependence between the moment $M_E^{P\%}$ and the mass flow rate $Q_m^{P\%}$ .

Next as a consequence, we consider changing, the role of the outlet nozzle of the reaction element, from a nozzle with constant area ($A_2$ = constant), in variable area nozzle depending on the mass flow rate $Q_m$, respectively: $A_2 = A_{2(}Q_m)$.

In this sense, to determine the expression of the variable parameter $A_2$, equation (2) is processed, with reference to $A_2$, by replacing $k$ with $k_1^{P\%}$ , and obtaining the equation:

$$A_2^2 - \left(2 \times A_1 \times k^{P\%}\right) \times A_2 + A_1^2 = 0 \qquad\qquad (8)$$

The solution of this equation, for values of $A_2$ in accordance with those of $A_1$, is the following::

$$A_2^{P\%}(Q_m) = k^{P\%}(Q_m) \times A_1^2 - A_1\{[k(Q_m) \times A_1]^2 - 1\}^{1/2} \qquad (9)$$

The solution requires avoiding the extraction of the radical from a negative value (respectively an irrational number), by imposing the condition::

$$k^{P\%}(Q_m) \times A_1 \geq 1 \qquad\qquad (10).$$

Based on what has been presented, it is possible to configure the basic structural solution, of the nozzle with variable area $A_2(Q_m)$, for the output of the reaction element, by introducing a new functional element called "Modulator", in two variants of positioning with respect to the reaction tube, thus ensuring the variation of the area $A_2$ with the measured flow rate.

The nozzle, according to the method, is configured by the fluidic coupling of two concentric parts, one being movable together with the reaction tube to which it belongs, and the other being immovable, fixed to the outlet connection of the flowmeter.

Thus now, the area $A_2 = A_2(Q_m)$, becomes the area of a circular crown with variable area, delimited on the outside by the inner wall (with diameter$D_e$) of the outlet of the reaction tube, being part of it, and implied mobile together with it, rotating with an angle $\alpha_E^{P\%}(Q_m^{P\%})$ related to the axis of symmetry of the rotation shaft (3) of the reaction tube (2).

This angular displacement of the reaction tube is determined by the rotation angle $\alpha_E^{P\%}$ (torsion) of the sensitive element of the moment transducer, angle for which the moment transducer develops the moment $M_E$ balancing the reaction moment $M_R$, and ensuring $M_E^{P\%} = M_R^{P\%} = F_R^{P\%} \times L_R$ , (where $L_R$ is the arm force $F_R^{P\%}$ ) and implicitly its measurement.

On the inside, specific to the concept of the method, the area $A_2(Q_m)$ is delimited by the contour of a centrally placed part, having the diameter $D_i$

Consequently, the outlet nozzle of the reaction element has the general expression:

$$A_2(\alpha_E) = 0{,}25 \times \pi \times (D_e^2 - D_i^2) \qquad\qquad (11)$$

This method provides two achievement versions of the variation of the area $A_2 = A_2(\alpha_E)$ of the circular crown of the outlet nozzle of the reaction element, compared to the mass flow rate $Q_m$.

In the first variant, compared to the variation of the flow rate $Q_m$, the outer diameter $D_e$ of the circular crown is kept constant, and the inner diameter $D_i$ varies with it.

In the second version, compared to the variation of the flow rate $Q_m$, the inner diameter $D_i$ al of the circular crown is kept constant, and the outer diameter $D_e$, varies with it.

Thus, in the first variant, the circular crown with area $A_2(\alpha_E) = A_2(Q_m)$ is delimited on the outside by the inner wall (with diameter $D_e$ = constant) of the outlet of the reaction tube, being part of it, and movable with it, rotating with the angle $\alpha_E^{P\%}(Q_m^{P\%})$ , respectively the rotation angle of the sensitive element of the moment transducer, for which it is ensured the balancing $M_E^{P\%} = M_R^{P\%}$ .

On the inside, the circular crown with the area $A_2(Q_m)$ is delimited by a centrally positioned part (named, due to its functional role, "inner Modulator"), having a profiled contour with diameter $D_i^{P\%}$, variable corresponding to the angular position $\alpha_E^{P\%}$ (related to the flow rate $Q_m^{P\%}$) of the reaction tube, respectively of the plane in which the area $A_2^{P\%}$ is located (and implicitly $D_i^{P\%}$) and thus resulting $D_i^{P\%} = D_{Mi}(\alpha^{P\%}) = D_{Mi}(Q_m^{P\%})$.

The axis of symmetry of the "inner Modulator" is the same as the axis on which the centre of the outlet section of the reaction tube is positioned, in its angular displacement, together with it, being slightly curved with the radius $R_C$, the radius whose centre is in the axis of symmetry of the rotation shaft of the reaction tube.

The "inner Modulator" is immobile, being centrally and rigidly placed relation to the inlet nozzle, of the outlet connection of the flowmeter.

Thus, the necessary value of the corresponding area $A_2^{P\%} = A_2(\alpha_E^{P\%})$ is obtained, according to relation (9), related to the angular position $\alpha_E^{P\%}$ of the measuring section, (respectively of the reaction tube), which in its turn determines, for the parameter k, the value $k^{P\%}$, which ensures the modulated dependence of the force of $F_R$, respectively MR against the flow rate $Q_m$, according to the relationship (4) respectively of themoment $M_R$ (5).

The fluid coming out of the nozzle of the reaction element is taken over by the inlet nozzle of the outlet connection 5 of the flowmeter.

In the second variant, the area $A_2(\alpha_E) = A_2(Q_m)$ is delimited on the outside by the inner wall (with the diameter $D_e = D_{Me}^{P\%} = D_{Me}^{P\%}(\alpha_E^{P\%})$ of the exit of the reaction tube, being part of it, and movable with it, rotating with the angle $\alpha_E^{P\%}(Q_m^{P\%})$, angle corresponding to ensuring balancing $M_E^{P\%} = M_R^{P\%}$.

Due to its functional role, this inner exit wall of the reaction tube is called "outer Modulator", its diameter $D_{Me}^{P\%}$ being located in the plane of the area $A_2^{P\%} = A_2(\alpha_E^{P\%})$, plane related to the exit section from the reaction tube, having the angular position $\alpha_E(Q_m^{P\%})$.

On the inside, the area $A_2(Q_m)$ is delimited by the outline of a 'pair part' PP, positioned centrally, concentric with the "outer Modulator", and having the axis of symmetry slightly curved with radius $R_C$, the radius whose centre is in the axis of symmetry of the rotation shaft of the reaction tube.

This pair part PP is immobile, being placed in the centre of the inlet nozzle of the outlet connection of the flowmeter.

The axis of symmetry of the "outer Modulator" is the same as the axis on which the centre of the outlet section of the reaction tube is positioned, in its angular displacement, together with it, being identical to the axis of symmetry of the immovable inner pair part PP, centrally positioned.

Similar to the first variant, the area $A_2^{P\%} = A_2(Q_m^{P\%}) = A_2(\alpha_E^{P\%})$, related to the exit section of the reaction element, depends of the angular position $\alpha_E^{P\%}$ of its section, respectively of the reaction tube.

The value of the angle $\alpha_E^{P\%}$ is the one at which the rotation of the reaction tube stops respectively, when the moment transducer balances the reaction moment $M_R$, respectively when $M_E^{P\%} = M_R^{P\%}$.

The fluid coming out of the nozzle of the reaction element is taken over by the inlet nozzle of the outlet connection of the flowmeter.

The profile of the Modulator is characterized by the coordinates $\alpha_E^{P\%}, D_M^{P\%}$, in which:

$\alpha_E^{P\%}(Q_m^{P\%})$ - represents the angular position of the plane of the exit section of the reaction tube, plane in which is to be found the area $A_2^{P\%} = A_2(Q_m^{P\%})$.

$D_M^{P\%}(A_2^{P\%})$ - represents the diameter of the Modulator, whose value is established according to $A_2^{(P\%)}$, with specific relationships, for each of its two versions, respectively of the "Modulation Block " specified previously.

In this sense, corresponding to the two versions of the variable area $A_2(Q_m)$, by the " Modulation Block" the diameter of the "Modulator" has the following expressions:

a. " Modulation Block " with inner Modulator

$$D_M^{P\%} = \left[D_e^2 - A_2^{P\%}/(0,25 \times \pi)\right]^{1/2} \tag{12}$$

b. " Modulation Block " with outer Modulator

$$D_M^{P\%} = \left[D_i^2 - A_2^{P\%}/(0,25 \times \pi)\right]^{1/2} \tag{13}$$

where:

$\alpha_E^{P\%}, A_2^{P\%}, D_M^{P\%}$ are the functional parameters of the outlet nozzle of the reaction element, all depending in a correlated way on the value of the measured current flow $Q_m^{P\%} = P \times Q_m^{100\%}/100$.

The method provides the use of a sensor for the measuring of the reaction force $F_R$, or of the corresponding reaction moment $M_R^{P\%} = F_R^{P\%} \times L_R$, which, through the proportional development with the angular displacement $\alpha_E$ of the reaction tube of the flowmeter, of a moment $M_E = M_R$, ensures the balancing and implicitly the measurement of the moment $M_R$.

In a manner completely specific to the present invention, the method takes into account the analytical method followed to determine the main characteristics: the accuracy of the measurement, the extension of the measurement range, imposed on the force or moment sensor of the force with which it is provided, depending on the characteristics imposed on the flowmeter in which component is included.

In this sense, it is stated that it is known that the accuracy is expressed as relative measurement accuracy, which is specified in two ways, as a percentage of the reading (% o.r.) or as a percentage of the full scale (% o.f.s.) of the device. Regarding the flowmeters reaction, the analytical correlation between the "accuracy of the reaction flowmeters" and the "accuracy of the sensor" of the reaction force $F_R$ (measured by its effect, respectively the moment $M_R$), is ensured with reference to the related measurement errors.

Starting from these two ways of specifying the accuracy of the force sensor (respectively, the force moment), as a percentage of its maximum scale $E_s$ (% o.f.s.), or as a percentage of the $E_S$ reading (% o.r.), we proceed to obtain the analytical expression of the turndown of the flowmeter with modulated reaction.

With reference to the moment sensor wit balancing the reaction moment:

$$E_s(\text{abs}) = E_s \ (\% \ \text{o.f.s.}) \times M_{E,Max} \times 10^{-2} \tag{14}$$

in which:
$E_S$ (abs) - the absolute error of the sensor, calculated according to the error $E_S$ (% o.f.s.) of the moment sensor, expressed as a percentage of its maximum scale, and the value of its maximum scale $M_{E,Max}$ (respectively the maximum value of the moment $M_E$ measurable by sensor )

On the other side :

$$E_{S,Max} \ (\% \ \text{o.r.}) = E_S \ (\text{abs}) \times M_{E,Min}^{-1} \times 10^2 \tag{15}$$

in which:

$E_{S,Max}$ (% o. r. ) - the value of the maximum permissible relative error of the sensor.
$M_{E,Min}$ - the minimum value of the moment $M_E$, measured by the sensor, for which the sensor ensures the measurement with the accuracy $E_{S,Max}$ (% o. r. ).

By replacing $E_S$ (abs), from expression (14) in expression (15), it results:

$$E_{S,Max} \ (\% \ \text{o.r.}) = E_S \ (\% \ \text{o.f.s.}) \times M_{E,Max} \times M_{E,Min}^{-1} \qquad (16)$$

Since the "maximum permissible relative error" $E_{S,Max}$ (% o. r. ), of the respective moment sensor, determines and is equal to the "maximum permissible relative error" $E_{,FMax}$ (% o. r. ), corresponding to the reaction flowmeter, whose component is, respectively, $E_{S,Max}$ (% o. r. ) = $E_{F,Max}$ (% o. r. ), by processing relation (16), it results:

$$M_{E,Max}/M_{E,Min} = E_{S,Max} \ (\% \ \text{o.r.})/E_S \ (\% \ \text{o.f.s.}) = E_{F,Max} \ (\% \ \text{o.r.})/E_S \ (\% \ \text{o.f.s.}) \qquad (17)$$

Bibliographic reference [2]

On the other hand, according to the dependence between the mass flow rate $Q_m$ and the reaction force $F_R$ generated by it, respectively its effect, the reaction moment $M_R$, permanently balanced by the moment $M_E = M_R$, measured by the moment sensor, presented by equation (6), results, correlated with the turndown of the reaction flowmeter (denoted by "T"), the following expression:

$$M_{E,Max}/M_{E,Min} = (Q_{m,Max}/Q_{m,Min})^{1/n} = T^{1/n} \qquad (18)$$

respectively:

$$T = Q_{m,Max}/Q_{m,Min} = \left[ E_{F,Max} \ (\% \ \text{o.r.})/E_S \ (\% \ \text{o.f.s.}) \right]^n \qquad (19)$$

Consequently, correlated with the measuring accuracy $E_{F,Max}$ (% o. r. ), established for the flowmeter with modulated reaction, the moment sensor must respect the relation (19), regarding its characteristics: the accuracy $E_S$ (% o.f.s.) and the extension T of the measurement range of the reaction flowmeter to which it belongs.

Based on the principle functional considerations stated previously, Table 1 illustrates synoptically, through case examples, the increase in performance of reaction flowmeters, achieved by modulating the reaction.

**Table 1 Synoptic presentation through case examples of the increase in the performance of reaction flowmeters by modulation of the reaction**

| Type of reaction flowmeter | | Functional equation | Analitical expression | Variation of turndown values $T = Q_{m,Max}/Q_{m,Min}$, depending on the precision ($E_{F,Max\,permissible}$) of the flow meter, and the precision ($E_S$) of the force (Moment) sensor related to the flow meter | | | | | | |
|---|---|---|---|---|---|---|---|---|---|---|
| | | | | $E_{F,Max} = 1,5\% \ o.r.$ | | $E_{F,Max} = 1\% \ o.r$ | | $E_{F,Max} = 0,5\% \ o.r$ | | $E_{F,Max} = 0,1\% \ o.r$ |
| | | | | $E_S = 0,1\%$ o.f.s. | $E_S = 0,025\%$ o.f.s. | $E_S = 0,1\%$ o.f.s. | $E_S = 0,025\%$ o.f.s. | $E_S = 0,1\%$ o.f.s. | $E_S = 0,025\%$ o.f.s. | $E_S = 0,02\%$ o.f.s. |
| Conventionally non-linear | | $F_R = k_1^{100\%} \times \rho^{-1} \times Q_m^2$ where: $k_1 = $ constant | $\left[\dfrac{E_{F,Max\,permissi.}(\% \ o.r.)}{E_S \ (\% \ o.f.s.)}\right]^{1/2}$ | 3,8 | 7,8 | 3,2 | 6,3 | 2,236 | 4,47 | 2,236 |
| Linear | | $F_R = k_1^{100\%} \times \rho^{-1} \times Q_m$ where: $k_1 = k_1^{100\%} \times Q_m^{-1}$ | $\dfrac{E_{F,Max\,permiss.}(\% \ o.r.)}{E_S \ (\% \ o.f.s.)}$ | 15 | 60 | 10 | 40 | 5 | 20 | 5 |
| With modulated reaction 1/n, where: | n=1,5 | $F_R = k_1^{100\%} \times \rho^{-1} \times Q_m^{1/1,5}$ where: $k = k_1^{100\%} \times Q_m^{-2/1,5}$ | $\left[\dfrac{E_{F,Max\,permiss.}(\% \ o.r.)}{E_S \ (\% \ o.f.s.)}\right]^{1,5}$ | 58,1 | 464 | 32 | 253 | 11,2 | 90 | 11,2 |
| | n=2 | $F_R = k_1^{100\%} \times \rho^{-1} \times Q_m^{1/2}$ where: $k = k_1^{100\%} \times Q_m^{-3/2}$ | $\left[\dfrac{E_{F,Max\,permiss.}(\% \ o.r.)}{E_S \ (\% \ o.f.s.)}\right]^{2}$ | 225 | 3.609 | 100 | 1.600 | 25 | 400 | 25 |
| | n=2,5 | $F_R = k_1^{100\%} \times \rho^{-1} \times Q_m^{1/2,5}$ where: $k = k_1^{100\%} \times Q_m^{-4/2,5}$ | $\left[\dfrac{E_{F,Max\,permiss.}(\% \ o.r.)}{E_S \ (\% \ o.f.s.)}\right]^{2,5}$ | 867 | 26.742 | 318 | 10.025 | 55,9 | 1.780 | 55,9 |
| | n=3 | $F_R = k_1^{100\%} \times \rho^{-1} \times Q_m^{1/3}$ where: $k = k_1^{100\%} \times Q_m^{-5/3}$ | $\left[\dfrac{E_{F,Max\,permiss.}(\% \ o.r.)}{E_S \ (\% \ o.f.s.)}\right]^{3}$ | 3.372 | 209.030 | 1.000 | 62.710 | 125 | 7.838 | 125 |
| | n=3,5 | $F_R = k_1^{100\%} \times \rho^{-1} \times Q_m^{1/3,5}$ where: $k = k_1^{100\%} \times Q_m^{-6/3,5}$ | $\left[\dfrac{E_{F,Max\,permiss.}(\% \ o.r.)}{E_S \ (\% \ o.f.s.)}\right]^{3,5}$ | 13.075 | $1,53 \times 10^6$ | 3.160 | 408.000 | 279 | 35.600 | 279 |
| | General expression | $F_R = k_1^{100\%} \times \rho^{-1} \times Q_m^{1/n}$ where: $k = k_1^{100\%} \times Q_m^{-\left(2-\frac{1}{n}\right)}$ | $\left[\dfrac{E_{F,Max\,permiss.}(\% \ o.r.)}{E_S \ (\% \ o.f.s.)}\right]^{n}$ | | | | | | | |

The analysis of the data in the table highlights a series of remarkable characteristics and phenomena, resulting from the extreme flexibility ensured by the invention, in the generation of flowmeter solutions to ensure flow measurement for various turndowns and various desired measurement accuracies, respectively for various applications that involve measuring the flow rates of a wide range of fluids using various performance capabilities of the reaction force (moment) sensors related to the flowmeters.

The data in Table 1 are interpreted in parallel with the comparative graphic presentation of the functional curves of the structural types of reaction flowmeters highlighted in Fig, 4.

In this sense, first of all, it should be noted that the solution of flowmeters with modulated reaction-allows, through the progressive modulation of the reaction, respectively by the progressive increase of the value of the modulation parameter "'n", both the configuration of the series of the reaction flowmeters widely known in the state of the art, which we call "flowmeters with conventional (non-linear) reaction", respectively, "flowmeters with linear reaction", also known in the state of the art (patent document EP 23020258.2), which thus become particular cases of the present global configuration solution through modulation, as well as of some new and innovative flowmeters, with modulated reaction, configured for the value of the parameter n > 1, having a specific non-linearity of the equations and implicitly of their functional curves and performance (turndown), its accuracy and that of the moment sensor used) rigorously analytically correlated.

By detailing, it should be mentioned that for the value of the modulation parameter n = 1/2, the series of "flowmeters with conventional (non-linear) reaction" is obtained, the most well-known and used in the state of the art dedicated to flowmeters with non-linear characteristics.

Also, for the value of the modulation parameter n = 1, the solution of "flowmeters with linear reaction" is obtained.

Secondly, it is necessary to emphasize that the present method of modulating the reaction of flowmeters with reaction, by introducing the modulation parameter "n" in their functional equation, ensures for values n > 1 the change of the shape of their functional curve, from the parabola (for n < 1), in the one corresponding to the inverse function of the parabola (going through the linear allure, related to n=1), with related advantages, the essential ones being ensuring the significant increase in the turndown values, related to the corresponding values imposed on their flow measurement accuracy $eE_{F,Max \cdot permissible}$ (%o.r.)

Thirdly, it turns out that the implementation of the present method ensures the obtaining of the major increase in the rangeability of flowmeters with modulated reaction, for values of the modulation parameter $n \geq 2$, and a wide range of values of the measurement accuracy $E_{F,Max_{permissible}}$ (%o.r.) Secondly, there are highlighted an increasingly steep increase in the values of the reaction moment depending on the measured flow, coresponding to the increase in the values of the modulation parameter "n" (from n = 0.5 to n = 1, respectively n > 1) implemented in the flowmeter with modulated reaction, and implicitly the sharp increase in the slope of the functional curve, having as an essential effect the increase in the value of the turndown, this being ensured especially through a sharp movement, towards lower and lower values of the minimum measured flow, $Q_{m.Min}$, revealed by the case examples presented in Table 1, with reference to concrete flowmeter structures that can be realized, bearing in mind the technological and functional limitations, which must be taken into account when establishing the performance of the force (moment) sensor used, as well as establishing the value of the modulation parameter $n \geq 2$, depending on the inclusion of the values of the fluid flow velociry through the outlet nozzle of the reaction element, in the compatibility range.

Consequently, in Table 1 the values that are practically not feasible have been highlighted with a grid - the data located under the thick line , these variants being not compatible, either with the ensuring of a resonable fluid flow regime, or with the current technological capabilities regarding both the force sensor (moment) and the manufacturing accuracy of the Modulator's (M) profile, respectively of the pair part (PP), necessary for the rigorous realization of the Modulation Block respectively of the outlet nozzle with the area $A_2(\alpha_E)$,-from materials compatible with the measured fluid.

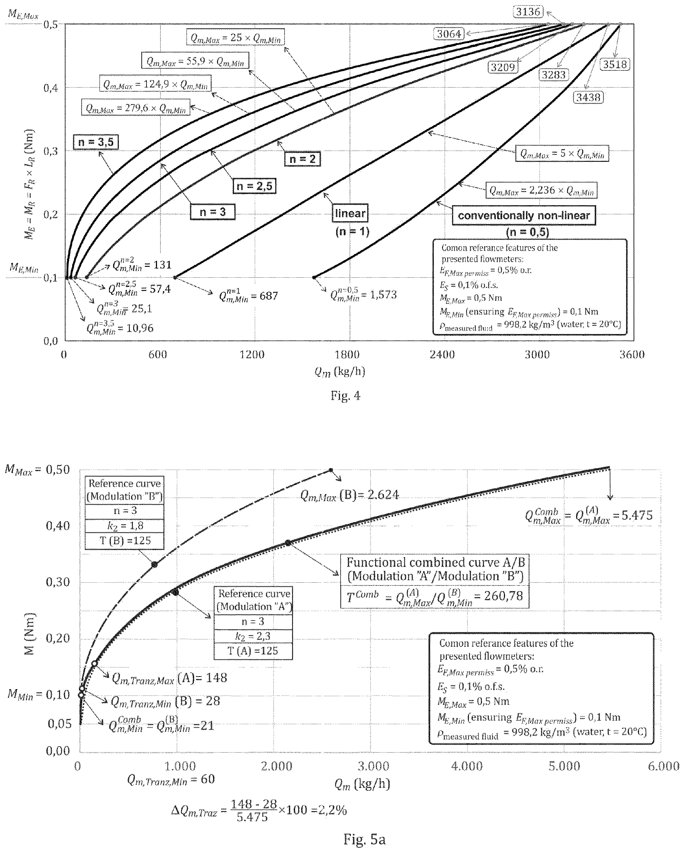

The analysis carried out through Table 1, is detailed in Fig. 4, where the functional curves of these structural types of flowmeters with reaction are presented, in comparison, corresponding to the common reference data highlighted in the content of Figure 4, all flowmeters, having the same nominal diameter, respectively ensuring the same high measurement accuracy, $E_{F,Max,permissible} = 0,5\%$ o. r, water being the measured fluid, and the moment sensor has the accuracy $E_S = 0.1\%$ o.f.s.

For these common characteristics, the graph highlights, first of all, the significant increase of the turndown from the value of T=2.236, for the currently known conventional (non-linear) reaction flowmeter, to the value of T = 5 for a flowmeter with linear reaction, and respectively progressive, to values 1...2 orders of magnitude higher corresponding to the increase in the value of the modulation parameter "n" indicated for each individual functional curve.

Secondly, as it is highlined, an increasingly step increases in the values of the reaction moment depending on the measured flow, corresponding the increase in the values of the modulation parameter "n" (from n = 0.5 to n = 1, respectively n > 1) implemented in the flowmeter with modulated reaction, and implicitly the sharp increase in the slope of the functional curve, having as an essential effect the increase in the value of the rangeability, ensured, especially through a sharp displacement, towards lower and lower values of the minimum measured flow rate, $Q_{m.Min}$,

Also, from Table 1, it results that, especially for the value of the modulation parameter n = 3.5, and for a lower accuracy of the flowmeter, there are application restrictions, which arise both from obtaining an appropriate flow regime in the outlet nozzle (respectively the necessary velocity, for obtaining $Q_{m,Min.Theoretic}$), becoming at a given moment, greater than the one corresponding to the value corresponding to the minimum flow $Q_{m,Min}$ which determines the possible limit value of the turndown $T_{limit} < T_{theoretic}$, where $T_{theoretic}$ is the theoretical value obtainable according to its analytical calculation relation).

The data in Table 1 and in particular the graphic functional curves in Fig. 4 indicate the real opportunity, which is effectively implemented in an innovative way by the present invention, of configuring the functional curve of flowmeters with modulated reaction, by combining two functional reference curves, modulated curve A and respectively modulated curve B in the situation where the turndown obtained by implementing a single functional moodulated curve A is below the target value and it is necessary its combination with a second functional modulation curve B.

The method establishes that, when the configuration achieved through the respective modulation (called "A modulation"), does not ensure obtaining a $T \geq T_{target}$ a second configuration variant (called "B modulation") should be performed, maintaining the same value of modulation parameter "n", as well as the reference characteristics related to the reaction flowmeter configured according to "A modulation", and thus the new configuration variant ("B modulation") will ensure flow measurement, in the range:

$$Q_{m,Tranz,Min}(B) \dots Q_{m,Min}(B) = Q_{m,Min}^{Comb}, \text{with a "narrow transition zone"} \quad Q_{m,Tranz,Max}(A) \dots Q_{m,Tranz,Min}(B)$$

The purpose of the combination is to reduce the value of the minimum measured flow, in this ease-senseensuring, by the second configuration option (B modulation), a corresponding value of the minimum measurable flow, respectively $Q_{m,Min}(B) < Q_{m,Min}(A)$, by using a lower value of the parameter $k_2$, compared to the one used in the configuration of "A Modulation ", $k_2(B) < k_2(A)$.

In Fig. 5a, an example of the overall configuration of a combined functional curve (called "A/B Modulation") is shown, starting from the analysis of two reference functional curves, called " A Modulation" and "B Modulation", configured for two different values of the coefficient $k_2$, respectively $k_2(A) = 2,3$ and $k_2(B) = 1,8$, the remaining of the configuration parameters being identical, respectively: n = 3, $E_{F,Max,permissible} = 0,5\%$ o.r., $\rho = 998,2\ Kg/m^3$, $M_{Max} = 0l, 5\ Nm$, $M_{Min} = 0,1\ Nm$, $E_S = 0.1\%$ o.f.s.

The contour of the combined functional curve unfolds in three areas, as follows:
In its first area, the combined curve is identified with the functional curve related to "A Modulation", (obtained according to the value $k_2(A) = 2,3$ of the parameter-$k_2$,) on the flow rate range:

$$Q_{m,Max}^{Comb} = Q_{m,Max}(A) \dots Q_{m,Tranz.Max}(A)$$

Thus, according to the analyzed example, the first area of the combined A/B curve takes place on the flow rate range $Q_m = (5.475.....148)$kg/h, and is identified with the contour of the "A Modulation " curve, where

$$Q_{m,Max}^{Comb} = 5475\ kg/h$$ and $Q_{m,Tranz.Max}(A) = 148$ kg/h.

In its second area, the combined functional curve transits from the contour of the functional curve of "A Modulation " to that of the related functional curve of "B Modulation", the curve characterized by $k_2(B) = 1,8 < k_2(A) = 2,3$, taking place on the "transition zone", related to the flow range:
$Q_{m,Tranz.Max}(A) \dots Q_{m,Tranz.Min}(B)$

Corresponding to the analyzed example, this area of the combined A/B curve takes place on the flow range $Q_m = (148...28)$ Kg/h.

In its third area, the combined functional curve starts with the point corresponding to the flow rate $Q_{m,Tranz.Max}(B)$ and then it continues, identifying itself with the contour of the functional curve related to "B Modulation ", on the flow range.

$$Q_{m,Tranz.Min}(B) \dots Q_{m,Min}(B) = Q_{m,Min}^{Comb}$$

Corresponding to the analyzed example, this area of the combined A/B curve takes place on the flow rate range

$$Q_{m,Tranz.Min}(B) = 28\ Kg/h \dots 21\ Kg/h = Q_{m,Min}(B) = Q_{m,Min}^{Comb},$$

The purpose and effect of the combination consists in reducing the value of the minimum measured flow rate, ensuring $Q_{m,Min}(B) < Q_{m,Min}(A)$, by using a lower value of the parameter $k_2$, in the "B Modulation" configuration, compared to the one used in the "A Modulation" configuration, respectively $k_2(B) < k_2(A)$.

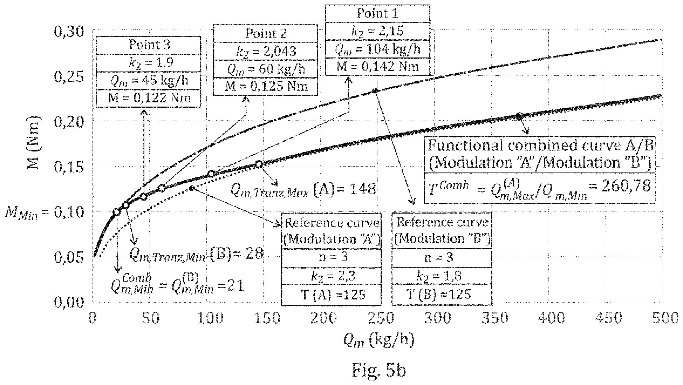

Fig.5.b shows a detail, regarding the realization of the "combined functional curve A/B", in the "transition zone" from one to the other functional reference curve, respectively from the curve, related to "Modulation A", to that related to "Modulation B", passing through the very narrow transition zone, $\Delta Q_m = 2{,}2\% \times Q_{m,Max}^{Comb}$ referring specifically to the following points of it:

a,The point that determines the "upper limit of the transition zone", having the characteristics:

$$Q_{m,Tranz.Max}\,(A) = 148\,\text{Kg/h}\,;\ k_2\,(A) = 2{,}3$$

$$M_E = (148/3600)^{1/3} \times (2{,}3)^{-1} = 0{,}15\,\text{Nm}$$

b. Preliminary, reiterating the fact that the transition involves the progressive incremental decrease of the value of the parameter $k_2$, from the value $k_2(A) = 2{,}3$ to $k_2\,(B) = 1{,}8$, each point of the curve corresponding to a specific value of parameter $k_2$, it continues with the indication of the positioning mode of three examples of points, distanced from each other, and placed intermediately, between the "upper limit" and the "lower limit" of the "transition zone", respectively:

- The point1, corresponding to the parameter $k_2 = 2{,}15$, at whose coordinates $Q_m = 104$ kg/h, corresponds to the coordinate:

$$M_E = (104/3600)^{\frac{1}{3}} \times (2{,}15)^{-1} = 0{,}142\,\text{Nm}$$

- The point 2, corresponding to the parameter $k_2 = 2{,}043$, at whose coordinate $Q_m = 60$ kg/h, corresponds to the coordinate:

$$M_E = (60/3600)^{1/3} \times (2{,}043)^{-1} = 0{,}125\,\text{Nm}$$

The point 3, corresponding to the parameter $k_2 = 1{,}9$, at whose coordinate $Q_m = 45$ kg/h, corresponds to the coordinate:

$$M_E = (45/3600)^{1/3} \times (1{,}9)^{-1} = 0{,}122\,\text{Nm}$$

c. The point that determines the "lower limit" of the "transition zone", with the characteristics:

$k_2\,(B) = 1{,}8$, respectively $Q_{m,Tranz.Min}(B) = 28\,\dfrac{\text{Kg}}{\text{h}}$, corresponding to its coordinate:

$$M_E = (28/3600)^{1/3} \times (1{,}8)^{-1} = 0{,}11\,\text{Nm}$$

It continues with the explanation of the modules for determining the turndown expression of the "combined modulated reaction flowmeter", whose functional curve (abbreviated as functional curve A/B) is obtained having, as a reference, the functional curves configured by "A Modulation" and respectively "B Modulation", corresponding to the same reference date, except for the value of the parameter $k_2$ which has different values, i.e. $k_2(A) > k_2(B)$

The turndown of the "combined modulated reaction flowmeter" characterized by the modulation parameter "n" has the generic expression:

$$T^{Comb}(n) = Q_{m,Max}(A)/Q_{m,Min}(B) \qquad (20)$$

where:

$$Q_{m,Max}(A) = Q_{m,Max}^{Comb}$$

$$Q_{m,Min}(B) = Q_{m,Min}^{Comb}$$

On the other hand, the two reference modulation variants, namely "A Modulation " and "B Modulation" being configured according to the same value of the modulation parameter "n",and respectively the reference data $E_{F,Max}$ (% o. r.) and $E_s$ (% o.f.s.), they have equal values of the turndown $T(A) = Q_{m,Max}(A)/Q_{m,Min}(A)$ and $T(B) = Q_{m,Max}(B)/Q_{m,Min}(B)$, respectively:

$$T(n) = T(A) = T(B) = \left[E_{F,Max}(\% \, o.\, r.\,)/E_S(\% \, o.\, f.\, s.\,)\right]^n \qquad (21)$$

By replacing the expression $Q_{m,Min}(B) = Q_{m,Max}(B) \times T^{-1}(n)$ into relation (20), it results:

$$T^{Comb}(n) = Q_{m,Max}(A) \times \left[Q_{m,Max}(B)\right]^{-1} \times T(n) \qquad (22)$$

Using, according to relation (6), the dependence (corresponding to the "n" parameter) of the flow rate $Q_m$ with respect to the moment M and the parameter $k_2$, through processing, it results:
on the one hand:

$$T(n) = [k_2(A) \times M_{Max}]^n \times [k_2(A) \times M_{Min}]^{-n} = [k_2(B) \times M_{Max}]^n \times [k_2(B) \times M_{Min}]^{-n} = [M_{Max}/M_{Min}]^n \quad (23)$$

And on the other hand

$$Q_{m,Max}(A)/Q_{m,Max}(B) = [k_2(A)/k_2(B)]^n \qquad (24)$$

By replacing these expressions in equation (22), it results:

$$T^{Comb}(n) = [k_2(A)/k_2(B)]^n \times [M_{Max}/M_{Min}]^n \qquad (25)$$

With reference to this example presented in Fig.5a,b, applying the turndown calculation relations, the following results are obtained:

a. Related to the configurations having the "A Modulation " and "B Modulation" functional curves:

$$T_{Theoretic}(A) = T_{Theoretic}(B) = [0,5 \, (\% \, 0.\, r.\,)/0,1\% \, o.\, f.\, s.]^3 = 125$$

According to graphical modulation:

$$T_{Achieved}(A) = 5475 \, \text{Kg/h} \, /43,8 \, \text{Kg/h} = 125:$$

$$T_{Achieved}(B) = 2624 \, \text{Kg/h} \, /21 \, \text{Kg/h} = 125$$

b. Related to the configuration having the combined functional curve A/B :

$$T_{Theoretic}^{Comb}(n = 3\,) = (2,3 \, /1,8)^3 \times (0,5 \, \text{Nm} \, / \, 0,1 \, \text{Nm})^3 = 260,78$$

According to graphical modulation:

$$T^{Comb}(n = 3) = 5475/21 - 260,72$$

It is noticeable the achievement of a major increase in the turndown, from the value of 125 to 260.7, a practical doubling of its value, achieved by the A/B functional configuration, as a result of the combined modulation.

The combination of the modulation curves A and B requires - as can be seen from Fig, 5b, the definition and implementation of a transition zone, capable of responding to a functioning without flow disturbances, over the entire measuring range of the flowmeter with modulated reaction.

Based on the considerations presented above, Table 2 presents, through case examples, the concrete way of obtaining major additional increases in the performance of reaction flowmeters. obtainable by the combined modulation of their reaction.

Consequently, both according to the analytical bases of the method and the quantitative and qualitative quantifications previously exposed, the method implies the successive completion of two stages, respectively, in a first stage(I), the implementation in the structure of the reaction flowmeter of a type "A Modulation", based on the use of a single modulation curve" type A", and when the imposed turndown condition is not satisfied, the transition to a second stage (II), consisting in implementing in the structure of the reaction flowmeter a combined Modulation A/B, based on the combined use of two Modulation curves A and respectively B.

**Table 2. Presentation by case examples, of the additional performance increase of reaction flowmeters, through the combined modulation of the reaction**

| Type of reaction flowmeter with combined modulation of the reaction, defined by: | | Variation of turndown $T = Q_{m,Max}(A)/Q_{m,Min}(B)$, related to the flowmeter accuracy $E_{F,Max\ permissible}$ (% o.r.), and the accuracy of the force (moment sensor) $E_S$ (% o.f.s.), related to the reaction flowmeter | | | | | |
|---|---|---|---|---|---|---|---|
| Value of modulation parameter "n" | The values of the global parameters $(k_2(A)/(k_2(B)$ related to the pair of the reference functional curves (modulet „A" and modulet B], the determine "the functional combined curve" of „the flowmeter with combined modulated reaction" | $E_{F,Max} = 1\%\ o.r.$ $E_S = 0,1\%\ o.f.s.$ | | $E_{F,Max} = 0,5\%\ o.r.$ | | | $E_{F,Max} = 0,1\%\ o.r.$ $E_S = 0,02\%\ o.f.s.$ |
| | | Potentially achievable | Theoretical | $E_S = 0,1\%\ o.f.s.$ | $E_S = 0,025\%\ o.f.s.$ | | Potentially achievable |
| | | | | Potentially achievable | | Theoretical | |
| 3,5 | 2,3/1,8 | 820 | 7.450 | 659,7 | 675 | 73.380 | 659,7 |
| 3 | | 605 | 2.065 | 260,7 | 608 | 15.640 | 260,7 |
| 2,5 | | 565 | 580 | 102,1 | 565 | 3.180 | 102,1 |
| 2 | | 163 | 163 | 40,7 | 530 | 652 | 40,7 |

According to the first stage, in a first step the reference data are established: respectively the maximum flow rate $Q_{m,Max,target}$, the target turndown $T_{target} = Q_{m,Max}/Q_{m,Min}$, measurement precision $E_{F,Max,pemosoble}$ (% o.r.), density $\rho$ of the fluid to be measured.

At step 2, corresponding to the value of $Q_{m,Max,Target}$, are set, for A modulation configuration : the nominal diameter DN of the flowmeter, the values of the inlet and outlet areas $A_1$ si $A_2$ of the reaction tube, respectively the arm $L_R$ of the reaction force developed by it.

Next, at step 3, corresponding to the maximum reference value $Q_{m,Max,target} = Q_{m,Max}(A)$ of the flow rate, are established the maximum values of the reaction force $F_{R,Max}(A)$, and correlated with the length of its arm, $L_R$, the maximum value $M_{R,Max}$ of the reaction moment.

Step 4 aims to establish the functional type of the sensor used to measure the force $F_E = F_R$, respectively the sensor measuring the moment $M_E$, of balancing the reaction moment $M_R$ as well as the maximum measurable value of the force $F_{R,Max}(A)$ (respectively of the corresponding maximum moment $M_{E,,Max}$, correlated with the value $M_{R,Max}$) measurable by the sensor.

Starting from the maximum measurable value of the force $F_{E,,Max}$ (respectively of the moment $M_{E,Max}$ ) and correlated with the reference measurement accuracy, of the flowmeter $E_{F,Max\ permissible}$ (% o.r.)., at step 5 it is established the accuracy of measurement of the sensor $E_S$ (% o.f.s), and the value of the force $F_{E,Min}$ (respectively of the moment $M_{E,Min}$) necessary to ensure the measurement of the force in the range $F_{E,,Min}...F_{E,Max}$ (respectively of the moment, in the range $M_{E,Min},.. M_{E,Max})$,, with accuracy $E_{S,Max,permissible}$ (% o.r.) = $E_{FMax,permissible}$ (% o.r.).

In step 6, the value of the parameter $k_1^{100\%}$ is calculated, corresponding to the values of areas $A_1$ and $A_2$, according to relation (2) and in step 7, the value of the global parameter $k_2$ (A) is calculated, according to relation (7).

Step 8 aims to choose the value of the modulation parameter "n", which ensures the flowmeter the possibility of measuring the maximum flow rate $Q_{m,Max,target} = Q_{m,Max}$ (A), and a turndown $T = Q_{m,Max}$ (A)$/Q_{m,Min}$ (A) of the measurement range, optimally close to the value $T_{target}$,

At step 9, are calculated the values $Q_{m,Min}(A)$, measurable by the flowmeter with modulated reaction with the parameter "n", corresponding to the global parameter, with the value $k_2(A)$ and then the percentage weight $P_{Min}\%$ of the minimum flow rate $Q_{m,Min}$ (A), related to the value of the maximum flow rate $Q_{m,Max}(A)$.

In steps 10...12, the values $k_{Min}(n)$ and $k_{Max}(n)$, are successively calculated, corresponding to the flow rates $Q_{m,Min}$ (A) and $Q_{m,Max}$ (A), related to the value of the parameter "n", with relation (3), and then corresponding to them the calculation of the value of the areas $A_{2,Min}(n)$, si $A_{2,Max}$ (n), with relation (9) and, finally, the respective values $v_2^{A2,Min(n)}$ and $v_2^{A2,Max(n)}$ of the fluid flow speed through the areas $A_{2,Min}$ (n), and $A_{2,Max}$ (n).

At step 13 it is checked: the setting of the velocity $v_2^{A2,Min}$ of the fluid through the outlet nozzle, in the compatibility range and if the condition is met, it is passed to step 14 in which it is checked if the velocity: $v_2^{A_{2,Max}}$ is below the compatibility limit.

If the condition from Step 13 is not met, the procedure from Step 2 is resumed, and if the condition from Step 14 is not met, then the value of "n" is reduced accordingly and the procedure from Step 8 is resumed.

Finally, if the condition from Step 14 is met, continue with step 15, which establishes the configuration variant of the " Modulation Block ", with inner Modulator, or with outer Modulator.

Corresponding to the incremental division of the maximum angular displacement $\alpha_{E,Max}$ (with increment $\Delta P$, established correlated with the measurement accuracy), where $\alpha_E^{P\%} = \alpha_E(Q_m^{P\%})$, at step 16 the calculation is made for the range $P_{Min} \leq P(\alpha_E) \leq P_{Max}$, successively, of the parameters: $k^{P\%}(Q_m^{P\%})$, with relation (3), respectively: $A_2^{P\%}(k^{P\%})$, with relation (9).

Corresponding to the incremental division of the angular displacement $\alpha_{E,Max}$ (with increment $\Delta P$), at step 17, the following are established:

a) the profile of the Modulator, characterized by the coordinates:

- $D_M^{P\%} = D_M(A_2^{P\%})$ - the diameter of the Modulator, placed in the plane of the outlet section of the Modulation Block, related to the outlet of the Reaction Element, calculated with the analytical relations (12), or (13), specific to the version of the "Modulator" ("inner" or "outer")

- $\alpha_M^{P\%}$ - the positioning angle of the outlet section of the Modulation Block, corresponding to the balancing of the reaction moment $M_R$, with the moment $M_E = M_R$, developed by the moment sensor

and respectively

b) - the diameter of the pair part = constant

At step 18, the remaining of the configuration of the flowmeter with modulated reaction is completed, using those established previously, regarding the configured " Modulation Block ", and the adopted force (moment) Sensor.

At step 19, the rangeability value $T(A)$ is calculated, which can be achieved through the "A modulation" solution for configuring the flowmeter with modulated reaction (corresponding to the values set for the parameters "n" and $k_2$ (A), respectively: $T(A) = Q_{m,Max}(A)/Q_{m,Min}(A)$.

At step 20, it is checked if the obtained turndown $T(A)$ is $\geq T_{target}$, and if so, step 21 validates as the final solution "Configuration of A modulation " that satisfies the "initial reference requirements".

In the situation where the obtained urndown $T(A)$ is below the reference value $T_{target}$, it is concluded that it is necessary to increase the urndown value $T(A)$, achieved by modulation configuration A, and continue with "Stage II of the reaction modulation ".

Thus, in a first step, it is determined that the configuration variant of the flowmeter, made previously,- according to Stage I (named " A modulation"), ensures the operation of the "Flowmeter with modulated reaction", for the flow rate range:

$$Q_{m,Max}(A) = Q_{m,Max}^{Comb} ... Q_{m,Tranz.Max}(A).$$

Step 2 establishes that, a second variant (called "B Modulation") of configuration, made by maintaining the same value of the modulation parameter "n", as well as the performance and configuration of the flowmeter as a whole, related to "A Modulation", to ensure flow rate measurement, in the range:

$$Q_{m,Tranz,Max}(B), .. Q_{m,Min}(B) = Q_{m,Min}^{Comb}, \text{ with a "narrow transition zone" } Q_{m,Tranz,Max}(A) ... Q_{m,Tranz,Min}(B)$$

In the next step, it is established that the value of the minimum measurable flow rate $Q_{m,Min}(B)$ to be: $Q_{m,Min}(B). \leq Q_{m,Max}(A)/T_{target}$

In step 4, is made the calculation of the corresponding value of the parameter $k_2$ (B), related to "B Modulation", with the relation:

$$k_2(B) = Q_{m,Min}^{1/n}(B)/M_{Min}$$

where: $M_{Min}$ - the minimum value of the moment measured by the moment sensor corresponding to the minimum flow value $Q_{m,Min}$ (B), with the accuracy $E_{S\,Max\,permissible}$ (% o.r.) = $E_{F,Max\,permissible}$ (% o.r.),

After calculating in step 5, parameter $k_1^{100\%}$ (B) value, corresponding to the value of $k_2$ (B), in step 6 are calculated the value of the parameter $k$ ($Q_{m,Min}$), corresponding to the value of $k_1^{100\%}$ (B), , and the minimum flow rate established at, STEP 3, as necessary to be measured by the configured flowmeter, according to B Modulation.

On these bases, in step 7, the calculation of the value of the area $A_2$ ($Q_{m,Min}$) corresponding to the value of the parameter $k$ ($Q_{m,Mim}$) determined in STEP 6 is carried out, and then in step 8, corresponding to the value of the area $A_2$ ($Q_{m,Mim}$), and the value of the minimum flow rate $Q_{m.Min}$ (B), the value of the velocity $v_2$ of the flow of the fluid through the circular crown with this area, of the outlet nozzle of the reaction element, is determined.

At step 9, it is checked whether the speed $v_2$, related to the minimum flow rate $Q_{m.Min}$ (B), falls within the compatibility range.

If the velocity does NOT fall within the compatibility range, repeat the procedure from Step 2 of this stage, and if it does, proceed to the next step.

The functional curves expressed as $Q_m(kg/s) = (k_2 \times M_E)^n$, or $Q_m(kg/h) = 3600 \times (k_2 \times M_E)^n$ of the two configuration variants are plotted, comparatively correlated ( A Modulation and B Modulation) of the flowmeter with modulated reaction, both having the same modulation parameter "n", but different values of the parameter $k_2$, namely $k_2$ (A), and respectively $k_2$ (B).

By analyzing the parameters of the curves, an optimal positioning of the "transition zone" is established, from the curve related to the functional variant A, configured previously, to the curve related to the functional variant B, ensuring a smooth transition through a narrow transition zone of 1,5 - 2.5 % of $Q_{m,Max}^{Comb}$, respectively:

$$\Delta Q_m = Q_{m,Tranz\,Max}(A) - Q_{m,Tranz.Min}(B) = (0,015 \dots 0,025) \times Q_{m,Max}^{Comb}$$

The transition zone corresponds to:

- the angular displacement of the reaction tube $\Delta\alpha_{E,Tranz} = \Delta\alpha_{E,Tranz,Max} - \Delta\alpha_{E,Tranz,Min}$

- modification of the measured moment $\Delta M_{E,Tranz} = M_{E,Tranz\,Max} - M_{E,Tranz\,Min}$

At step 12, the percentage weights of the flow rates that limit the "transition zone" are established, with reference to the value of the maximum flow rate $Q_{m,Max}^{Comb}$ :

$P_{Min}^{\%}$ related to $Q_{m,Min}$ (B), $P_{Tranz,Max}^{\%}$ related $Q_{m,Tranz,Max,}$(A) respectively:

$$\Delta P_{Tranz}^{\%} = P_{Tranz\,Max}^{\%} - P_{Tranz,Min}^{\%}$$

Step 13 calculates the value of the parameter $k_1^{100\%}$, corresponding to the value of $k_2$(B), with the relation:

$$k_1^{100\%}(B) = \rho/[k_2(B) \times L_R],$$

respectively :

a. For the flow rate range $Q_{m,Min}^{Comb} = Q_{m,Min}(B) \leq Q_m \leq Q_{m,Tranz.Min}(B)$, te parameter

$k_1^{100\%}(B) = \text{constant}$, (with value calculated according to STEP 5)

b. For the transition zone, $Q_{m,Tranz,Min}$(B) < $Q_m \leq Q_{m,Tranz.Max}$ (A):

The value $k_{1,Tranz}^{100\%}$, related to B Modulation, is incrementally calculated (with increment $\Delta P$), by progressively

diminishing from the value $k_1^{100\%}$ (B) , established in la STEP 5, related to the inferior limit $Q_{m,Tranz.Min}$ (B), of the "transition zone", up to the level $k_1^{100\%}$ (A) , corresponding to the related "A Modulation", implicitly to the upper limit $Q_{m,Tranz\ Max}$ (A) of the transition zone of the flowmeter with modulated reaction, according to the relationship:

$$k_{1,Tranz}^{100\%} = \rho \times (L_R \times c)^{-1}$$ where:

$$c = k_2(B) + i \times [k_2(A) - k_2(B)] \times z^{-1}$$

$i$ = 0,.. z - the number of the increments

The value of "z" is conveniently chosen, so that the profiling of the Modulator to ensure a rigorous and smooth crossing of the transition zone..

Thus, after completing i=z incremental steps, the parameter $k_1{}^{100\%}$ progressively decreases its value from $k_1^{100\%}$ (B) , related to (i = 0) and corresponding to the lower limit $Q_{m,Tranz.Min}$ (B) of the zone, to the value $k_1^{100\%}$ (A) related to the upper limit $Q_{m,Tranz.Max}$ (A) of the transition zone.

At step 14, the incremental calculation (with $\varDelta P$ increment) of the $k^{P\%}$ parameter values is performed, with relation (3):

a. For flow rate range $Q_{m,Min}^{Comb} = Q_{m,Min}(B) \le Q_m \le Q_{m,Tranz.Min}(B)$ , corresponding to parameter ,

$k_1^{100\%}$ (B) = constant

b. For transition zone, $Q_{m,Tranz,Min}(B) < Q_m \le Q_{m,Tranz.Max}$ (A), the parameter $k^{P\%\ by}$ taking over the progressive modification of the parameter $k_{1,Tranz}^{100\%}$ , ensures the rigorous transition from the functional curve related to B Modulation to that related to A Modulation and reciprocally, respectively, in terms of values :

$$k_{Tranz,Min} = k(Q_{m,Tranz,Min}) \text{ la } k_{Tranz,Max} = k(Q_{m,Tranz,Max}),$$

si invers.

Step 15 involves maintaining, also for B Modulation, the same solution adopted by A Modulation, for the Modulation Block (with inner Modulator or with outer Modulator).

Step 16 is similar to step 17 of Stage I, which presupposes that, corresponding to the incremental division (with increment ΔP) of the angular displacement $\alpha_{E,Max}$ of the reaction tube, related to the range $P_{Min} \le P \le P_{Max}$, establishing:

a) the profile of the Modulator, characterized by the coordinates:

- $D_M^{P\%}$ - the diameter of the Modulator, placed in the plane of the outlet section of the Modulation Block related to the outlet section of the reaction element.

$\alpha_M{}^{P\%}$ the positioning angle of the outlet section of the Modulation Block

b) - the diameter of the pair part= constant

To be noted that the diameters of the two components of the Modulation Block have specific calculation expressions, corresponding to the configuration variant, established for the " Modulation Block ".

According to step 17, the moment sensor is functionally involved in the rigorous realization of the transition from A modulation to B modulation and vice versa.

At step 18, the rest of the configuration of the flowmeter with modulated reaction is completed, using those established previously, regarding the configured " Modulation Block ", and the adopted force (moment) sensor.

In the final steps, it is calculated $T^{Comb} = Q_{m,Max}^{Comb}/Q_{m,Min}^{Comb} = Q_{m,Max}(A)/Q_{m,Min}(B)$ , and it is checked and validated the assurance of the condition: $T^{Comb} \ge T_{target}$

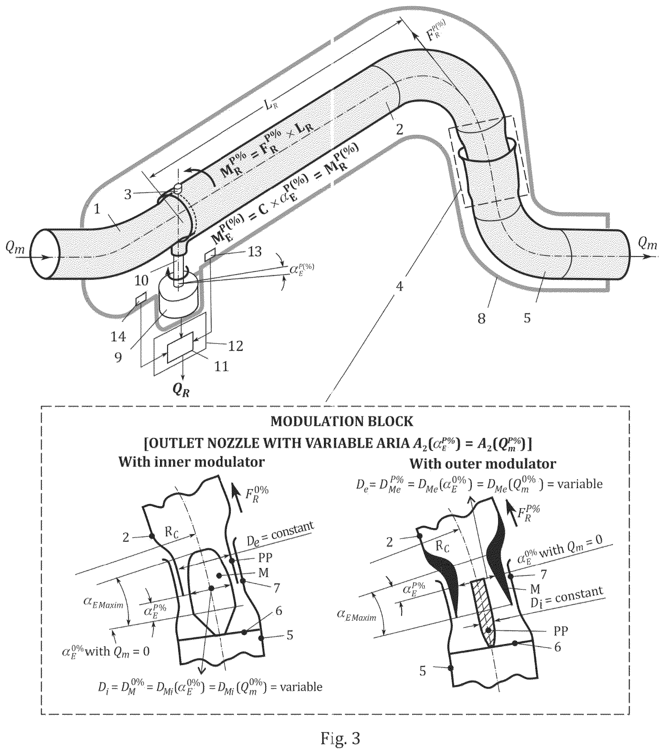

To explain the embodiment of the reaction flowmeter configured as based on the presented modulation method, we refer both to the basic structural diagram of flowmeters with modulated reaction (Fig. 1) and to the reference configuration of the flowmeter (Fig. 3) made based on the method, which uses a moment sensor, with balancing by elastic torsion.

Thus, the fluid with the flow rate to be measured $Q_m$ enters the flowmeter through the inlet connection (immobile) 1, which represents, from a structural point of view, the Reference Block (BR). It ensures, constructively and functionally, the constant value of the reference parameter $X_R$ of the flowmeter, compared to the variation of the flow rate, respectively $X_R = A_1$, where $A_1$ is the exit area from the (BR), implicitly also the entry area in the reaction tube 2 of the Reaction Element (ER) which, taking into account the specificity of the solution of the invention, is called the Modulated Reaction Element (ERM), related to the second structural block of the flowmeter, the Sensitive Block (BS).

Corresponding to its defining relationship, the variable parameter $X_V$, having the general expression $X_V = Q_m/X_R$, is achieved by $X_V = v_1$, where $v_1$ is the velocity of the fluid entering the reaction tube 2, variable depending on the flow rate $Q_m$.

The reference block (BR), together with the sensitive block (BS), form the primary element (EP) of the flowmeter.

The fluid coming out of the inlet connection 1 passes through a reaction tube 2, which changes its direction of flow by 90° causing the reaction force $F_R$ of the fluid to act on the reaction tube 2, causing a potential rotation with respect to its rotating shaft 3, the fluid continuing its flow, through the outlet nozzle 4, together with which it forms the "modulated reaction element" (ERM), and then through the outlet connection 5 of the flowmeter.

The known constructive solutions related to conventional flowmeters with non-linear reaction provide for the exit of the fluid from the reaction tube through a nozzle with a constant area ($A_2$ = constant) compared to the variation of the measured flow $Q_m$, the consequence of this configuration being the impossibility of changing the non-linear dependence of the reaction force $F_R$ against the measured flow rate $Q_m$, according to relation (1), respectively

$$F_R = k_1 \times \rho^{-1} \times Q_m^2$$ , where the parameter $k_1$ is a constructive constant of the flowmeter.

The technical solution according to the invention changes the role of the parameter $k_1$, from a constant parameter, to a variable parameter depending on the variation of the measured flow rate $Q_m$, by changing the functional role of the outlet nozzle of the reaction element, and involves the corresponding modification of the structural and functional scheme, so that its area $A_2$ should no longer be constant compared to the flow rate $Q_m$, but variable depending on it.

Thus, the basic structural diagram of these flowmeters in Fig.1, correlated with the diagram in Fig.3, indicates the configuration of the outlet nozzle 4 of the reaction element (ER), made by the gap-interstitium, in the form of a circular crown, for fluid flow between the outlet wall of the reaction tube 2, on the outside, which is mobile, and a centrally positioned part, inside, which is immobile, and concentric with it.

The essential modification, compared to the flowmeter with non-linear reaction, consists in replacing the configuration of the reaction element, consisting, at this, only of the reaction tube 2, having the outlet nozzle with constant area $A_2$, with a new configuration of the reaction element. This new configuration is made up of the reaction tube 2 and the outlet nozzle (4), of the modulated reaction element (ERM), that ensures the evacuation of the fluid.

The section of the outlet nozzle of the reaction element is located in the plane of the outlet end of the reaction tube, a plane characterized by its angular position $\alpha_E^{P\%} = \alpha_E(Q_m^{P\%})$, variable depending on the flow rate, position for which the balancing of the reaction moment $M_R$ is carried out, respectively $M_E = M_R$, the moment $M_E$ being obtained as a moment of elastic balancing.

Taking over the fluid coming out of the nozzle of the reaction element is ensured by a nozzle 7, which is immobile and concentric with the outer wall of the reaction tube, being rigidly fixed on the outlet connection 5 of the flowmeter.

The inlet 1 and outlet 5 connections are rigidly and tightly fixed to the casing 8.

Area $A_2$ of the outlet nozzle, related to the Modulation Block--4 has the angular position $\alpha^{P\%} E\left(Q_m^{P\%}\right)$ ,related to the plane in which it is located, and has the shape of a circular crown, being delimited, in this plane, having the position, on the outside, of the inner diameter of the outlet wall of the reaction tube (mobile wall together with the reaction tube to which it belongs), and on the inside, of the diameter of a part (immobile), placed in the centre of the section, the concentric part with the outer wall of the circular crown.

According to the two variants indicated by the method, to ensure the variation of the area of the circular crown of the outlet nozzle of the reaction element, there are two basic structures for realizing the modulated reaction, corresponding to the achievement of the Modulation Bloc-4 (the functional binomial by a Modulator (M) and a Pair Part (PP), as follows.

Variant 1: Modulation Block - with inner Modulator (M): with the circular crown having the mobile outer wall, (with the diameter $D_e$ = constant), and the immobile inner wall with variable diameter;

Variant 2 - Modulation Block with outer Modulator (M): with the circular crown having the mobile outer wall, (with variable diameter with the measured flow) and the immobile inner wall, with the diameter $D_i$ = constant.

According to the reference configuration of variant no. 1, related to the outlet of the reaction tube, the circular crown of the outlet nozzle has the mobile outer wall, together with the reaction tube, being characterized by the angular position $\alpha_E^{P\%}$ and the inner diameter $D_e$ = constant.

The inner wall of the circular crown is concentric with the outer one, being made by the specially profiled contour of the "inner Modulator" with the diameter $D_{Mi}^{P\%} = D_{Mi}(\alpha_E^{P\%})$ located in the plane with the angular position $\alpha_E(Q_m^{P\%})$ of the exit section, having the value established analytically, by default, depending on the angular position $\alpha_E(Q_m^{P\%})$ of the plane of the exit section (mobile) of outlet nozzle.

The angle $\alpha_E(Q_m)$ depends on the flow rate $Q_m$, characterizing the angular position of the reaction tube and implicitly of the outlet nozzle section, for which is ensured the balancing of the reaction moment $M_R^{P\%}$ by the corresponding balancing moment $M_E^{P\%}$. related to $Q_m^{P\%}$.

The axis of symmetry of the inner Modulator is slightly curved, with the radius of curvature originating in the axis of symmetry of the rotation shaft 3 of the reaction tube 2.

The reaction tube, and implicitly the plane of the outlet nozzle section, are mobile and characterized by the same angular positioning $\alpha_E(Q_m^{P\%})$.

Now the area $A_2$ has become variable with the flow rate $Q_m$, being the area of the circular crown between the outer wall with the diameter $D_e$ = constant and the inner one, with variable diameter $D_{Mi}^{P\%} = D_{Mi}(Q_m^{P\%})$.

The profile of the "inner Modulator" is defined by the variation with $\alpha_E$ of the diameter $D_{Mi}(\alpha_E)$, according to relation (12), corresponding to the values of the area $A_2(\alpha_E)$, now becoming, through its dependence on $\alpha_E = \alpha_E(Q_m)$, a variable parameter with the flow rate $Q_m$.

Thus, the values determined for area $A_2$, analytically corroborated with that of area $A_1$, ensure for the parameter $k^{P\%} = k(Q_m^{P\%})$, (thus turned into a variable parameter with the flow rate $Q_m$), the necessary corresponding values that ensure the modulation of the dependence of the reaction force $F_R$ on the flow rate $Q_m$, according to the relationship (4),

$$F_R^{P\%} = k_1^{100\%} \times \rho^{-1} \times (Q_m^{P\%})^{1/n}$$, respectively of the reaction moment $M_R$ according to relation (5).

According to the configuration of the Modulation Block -4, related to Variant 2, the outer wall (called "outer Modulator") of the circular crown with area $A_2$, (as indicated in Fig. 1 and Fig. 3) is mobile together with the reaction tube 2, which belongs to it, and has a special profiled contour, characterized by the variation of its diameter $D_{Me}^{P\%} = D_M(\alpha^{P\%})$, located in the plane with the angular position $\alpha_E(Q_m^{P\%})$, which is established depending on the angular position $\alpha_E(Q_m^{P\%})$ of the plane of the exit section (mobile) of the exit nozzle, according to expression (13).

The inner wall of the circular crown is immobile and concentric with the outer one, having a cylindrical profile (with constant diameter $D_i$ = constant), with a slightly curved axis of symmetry. The radius of curvature of the axis of symmetry originates in the axis of symmetry of the rotation shaft 3 of the reaction tube 2. The fluid coming out of the nozzle of the reaction element is taken over by the nozzle 7 which is immobile and concentric with the outer wall of the reaction tube, being fixed rigidly on the outlet connection 5 of the flowmeter.

The implementation of the reaction modulation method, through the version with inner modulator or with outer modulator, after verifying that the fluid velocity falls within the accepted range, depends on some concrete factors, first of all on the technological capabilities of making these very fine parts, from materials compatible with the physicochemical characteristics of the fluid to be measured, the progressive overcoming, at an increasingly higher level, of these challenges, implicitly ensuring the accelerated approaching of the performances, practically obtainable, to the high level, theoretically insurable, of these flowmeters.

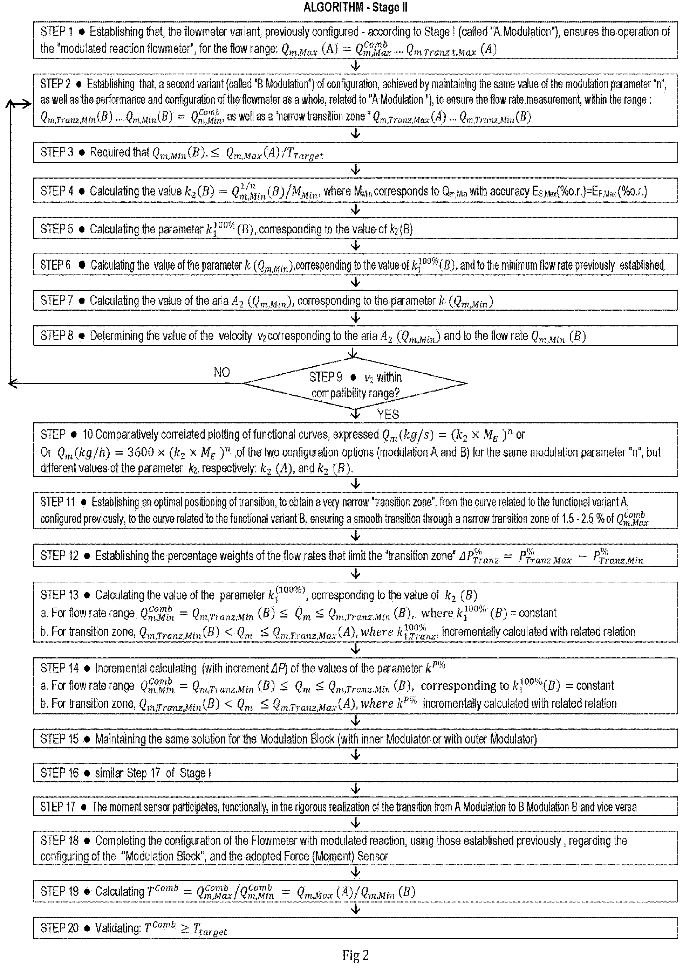

The essential difference compared to the solutions existing in the state of the art, in particular regarding flowmeters with linear reaction (patent document EP 23020258.2), is that the technical solution of the invention allows, through the technological implementation of the Modulation Block composed by Modulator (M) and Pair Part (PP), to achieve an outlet nozzle with variable area in which the configuration of the Modulator (M) is variable depending on the values of the modulation parameter n > 1, chosen to obtain a rangeability T(n) as close as possible to an imposed value called target turndown $T_{target}$ (according to Stage 1, or if necessary Stage 2 of the method and Fig.2). In this way, a special generalization and flexibility of the ability to measure a very wide range of fluid flow values is obtained, expressed by the range of turndown values $T = Q_{m,Max}/Q_{m,Min}$, potential to measure. The modulation parameter "n" is set rigorously incrementally, potentially from a wide range of values, being permanently correlated with that of the accuracy $E_S$ (% o. f. s. ) of the related sensor, intended for measuring the reaction force (moment).

The reaction tube 2 is coupled with the moment transducer 9, with elastic balancing, through the rigid and coaxial fixation of the shaft 3 of the reaction tube, with the torsion axis 10 of the transducer 9.

The sensitive block (BS) of the flowmeter with modulated reaction generates at its output the characteristic parameter $X_C = M_R \times F_R \times L_R$ ($L_R$ being the force arm of $F_R$), which applies to the Balancing Block of the Reaction Moment (BEMMR), related to the secondary element (ES) of the flowmeter. This, according to its operating principle, simultaneously generates two output parameters, namely the rotation angle $\alpha_E(Q_m^{P\%})$ related to the balancing of $M_R$, and the balancing moment $M_E = M_R$, implicitly corresponding to this rotation angle.

The other output parameter of the Balancing Block (BEMMR), respectively the balancing moment $M_E$, is applied to the Computing Block (BC)-11 of the rendering parameter $Q_R$ for the measured flow rate $Q_m$, located in a housing 1) fixed on the housing 8, outside it.

To ensure the correctness of the flow rate calculation with the pressure and temperature of the measured fluid, the output signals of the pressure sensors 13 and temperature 14 are applied to the Computing Block (BC).

Bibliographical references.

1. HORIA MIHAI MOTIT - A method of flow measurement based on a reaction force. Reaction flowmeters; FLOMEKO 2019 18th International Flow Measurement Conference; 26-28 June 2019, Portugal

2. HORIA MIHAI MOTIT - Fundamentals of reaction flowmeters, Boca Raton, FI; CRC Press/ Taylor & Francis Group,2022

**Claims**

1. Claim 1. Functional method of modulating the dependence on the flow rate of the force exerted on the reaction element in the structure of a flowmeter which, based on the currently known reference equations related to non-linear reaction flowmeters, takes into account the modification of the role of the parameter $k_1$ of the dependence between the mass flow rate Qm and the reaction force $F_R$ generated by it, when the fluid passes through the reaction element of the flowmeter, from a constant parameter, to a variable parameter depending on the flow rate $Q_m$, and consequently the change in the role of the outlet nozzle from the reaction element (ER), from a constant area nozzle $A_2$ = ct., in a variable area nozzle $A_2 = A_2(Q_m)$, depending on the flow rate by the fluidic coupling of two concentric parts, one of which is outer, mobile together with the reaction tube to which it belongs and the other, inner, immobile, fixed to the outlet connection of the flowmeter, a method that involves the use of a sensor measuring the reaction force $F_R$ or the related reaction moment, which ensures the balancing and implicitly the measurement of the moment $M_R$, **characterized in that** in order to achieve the objectives of the configuration of the flowmeter, respectively extended turndown for an imposed accuracy, there are established an original modulation parameter and a specific global parameter that includes analytically the urndown, making possible to modify the outlet configuration of the reaction element through a new functional and constructive element called "modulator" (M) which, together with a pair part (PP), forms a Modulation Block- 4 , which allows the functional and constructive implementation either as "inner Modulator" or as "outer modulator", and ensures, in a "first configuration option" of the flowmeter according to Stage I,based on the determination of its functional curve,implicitly defining the modulator, by using of a single modulation (Modulation A), and if the urndown target is not met, it continues, achieving in Stage II the configuration based on a functional combined curve (Combined Modulation A/B), that combines the "A Modulation " curve, with an additional "B Modulation " curve, by running the following logical sequence

   STAGE I

   Step 1 - establishing the reference data: respectively the maximum flow rate $Q_{m,Max}$,the target turndown $T_{target}$, the measurement precision $E_{Fpermissible}$ (% o.r) of flowmeter, density of the fluid to be measured $\rho$,
   Step 2- corresponding to the value of $Q_{m,Max,target} = Q_{m,Max}$. are determined (for "A" modulation configuration) the nominal diameter DN of the flowmeter, the values of the inlet and outlet areas $A_1 si A_2$ of the reaction tube and the arm $L_R$ of the reaction force developed by it;
   Step 3- corresponding to the maximum reference value $Q_{m,MaxTarget} = Q_{m,Max}$ (A) of the flow rate, are established the maximum value $F_{R,Max}$ of the reaction force, and correlated with the value of its arm, $L_R$, respectively the maximum value $M_{R,Max}$ of the reaction moment ;

Step 4 - establishing the functional type of the sensor used to measure the force $F_E = F_R$, respectively the sensor measuring the moment $M_E$, of balancing of the reaction moment $M_R$ and the maximum measurable value of the force $F_{E,Max}$ (respectively $M_{E,Max}$) measurable by sensor;.

Step 5 - establishing the measurement accuracy $E_S$ (% o.f.s.),or the sensor, and the value of the force $F_{E,Min,r}$ (respectively of the moment $M_{E,Min}$) necessary to ensure the measurement of the force in the range $F_{E,Min},..$ $F_{E,Max}$, respectively of the moment, in the range $M_{E,Min},.. M_{E,Max}$, with accuracy $E_{S,Max, permissible}$ (% o.r.) = $E_{FMax, permissible}$ (% o.r.);

Step 6 - calculating the value of the parameter $k_1^{100\%}$ corresponding to the values of areas $A_1$ and $A_2$;

Step 7 - calculation of the value of the global parameter $k_2$ (A);

Step 8 - choosing the value of the modulation parameter "n", which ensures the flowmeter the possibility of measuring the maximum flow, and the extension $T = Q_{m,Max}, (A)/Q_{m,Min} (A)$ of the measurement range, optimally close to the value $T_{target}$;

Step 9 - calculation of the values $Q_{m,Min}(A)$, measurable by the flowmeter with modulated reaction with the "n" parameter, corresponding to the global parameter, with the value $k_2$ (A) and then the percentage weight $P_{min}$ (%) of the minimum flow $Q_{m,Min}$ (A), compared to the value of the maximum flow $Q_{m,Max}(A)$;

Step 10 - calculation of the values $k_{Min}$ (n) and $k_{Max}$ (n), corresponding to the flow rates $Q_{m,Min}$ (A) and $Q_{m,Max}$ (A), related to the value of the parameter "n",

Step 11 - calculating the values of the areas $A_{2,Min}(n)$, and $A_{2,Max}$ (n) ;

Step 12 - calculation of the values $v_2^{A_{2,Min}(n)}$ and $v_2^{A_{2,Max}(n)}$ of the fluid flow velocity through the areas

$A_{2,Min}(n)$, and
$A_{2,Max}$ (n) ;

Step 13 - checking that the fluid velocity $v_2(A_{2,Min})$, through the exit nozzle, is within the compatibility range and if the condition is met, proceed to step 14 and if the condition from Step 13 is not met, resume the procedure from Step 2

Step 14 - checking the condition if the velocity: $v_2^{A_{2,Max}}$ is below the compatibility limit. and if this condition is not met, then the value of modulation parameter "n" is reduced accordingly, and the procedure according to Step 8 is resumed ;

If the condition from Step 14 is met, continue with step 15, ;

Step 15 - establishing the configuration variant of the " Modulation Block ", with "inner Modulator", or with "outer Modulator"

Step 16-calculation for the range $P_{Min} \leq P(\alpha_E) \leq P_{Max}$, succesively, of the parameters: $k^{P\%}(Q_m^{P\%})$ ,

respectively : $A_2^{P\%}(k^{P\%})$ ;

Step 17- establishing the profile(**characterized by** coordinates $D_M^{P\%} = D_M(A_2^{P\%})$ and $\alpha_M^{P\%}$ of the Modulator, and the diameter = constant; of its Pair Part

Step 18 - completing the configuration of the Flowmeter with modulated reaction, using the information regarding the configured "Modulation Block ", and the adopted force (moment) sensor;

Step 19-calculation of the tumdown value of T(A), obtained by above achieving of " A " Modulation;

Step 20 - checking the condition if the obtained tumdown T(A) is above the reference value $T_{target}$ and in the affirmative case proceed to Step 21, and in the negative case continue with Stage II

Step 21- validation of the final solution obtained, respectively configuration through "A" Modulation - that satisfies the "initial reference requirements". In the situation where the obtained turndown T(A) is below the reference value $T_{target}$, it is concluded that it is necessary to increase the turndown value T(A), obtained using only by "A" Modulation, and need to continue with "Stage II" of reaction modulation

STAGE II

Step 1 - it is established that, configuration option of the flowmeter (according to Stage I ) ensures the operation of the "Flowmeter with modulated reaction", for the flow range:

$$Q_{m,Max}(A) = Q_{m,Max}^{Comb} \dots Q_{m,Tranz,Max}(A)$$

Step 2 - establishing that the second variant (called "B Modulation") of configuration, ensures the flow measurement, in the range: $Q_{m,Tranz,Min}(B), \dots Q_{m,Min}(B) = Q_{m,Min}^{Comb}$, with a "narow transition zone" $Q_{m,Tranz,Max}(A) \dots Q_{m,Tranz,Min}(B)$

Step 3- it is required that the value of the minimum measurable flow $Q_{m,Min}$ be lower than the value of the minimum flow $Q_{m,Min}(A)$, measurable by "A Modulation", respectively: $Q_{m,Min}(B) < Q_{m,Max}(A)/T_{target}$

Step 4, - calculate the corresponding value of the parameter $k_2(B)$, related to "B Modulation", with the relation:

$$k_2(B) = Q_{m,Min}^{1/n}(B)/M_{Min}$$

Step 5 - calculation of the value of the parameter $k_1^{100\%}(B)$, corresponding to the value of $k_2(B)$ ;

Step 6- calculation of the value of the parameter $k(Q_{m,Min})$, corresponding to the value of $k_1^{100\%}(B)$,, and the minimum flow established at, STEP 3;

Step 7 - calculating the value of the area $A_2(Q_{m,Min})$ corresponding to the value of the parameter $k(Q_{m,Mim})$ determined at STEP 6;

Step 8, corresponding to the value of the area $A_2(Q_{m,Mim})$, and the value of the minimum flow rate $Q_{m.Min}(B)$, it is determined.the value of the velocity $v_2$ of the fluid flow through the circular crown with this area, of the outlet nozzle of the Reaction Element ;

Step 9 - checking the condition if the velocity $v_2$, related to the minimum flow rate $Q_{m.Min}(B)$, falls within the compatibility range, so that if the velocity does NOT fall within the compatibility range, the procedure from Step 2 of Stage II is resumed, and if it fits, go to step 10;

Step 10 - plotting the functional curves espressed $Q_m(kg/s) = (k_2 \times M_E)^n$

or $Q_m(kg/) = 3600 \times (k_2 \times M_E)^n$ of the configuration variants (by A and B Modulations) of the flowmeter with modulated reaction, for the same value of modulation parameter "n", but different values of the parameter $k_2$,: $k_2(A)$, and respectively $k_2(B)$;

Step 11 establishing an optimal positioning of the "transition zone"(to be very narrow, with an minor procentual weight), from the reference curve of the functional variant "A Modulation", to the curve of the functional variant "B Modulation",, respectively:

$$\Delta Q_m = Q_{m,Tranz\,Max}(A) - Q_{m,Tranz.Min}(B) = (0,015 \dots 0,025) \times Q_{m,Max}^{Comb}$$

Step 12 - establishing the percentage weights, related to $Q_{m,Max}^{Comb}$ of the flow rates that limits the " tranzition zone";

Step 13 - calculation of the value of the parameter $k_1^{100\%}(B)$, corresponding to the value of $k_2(B)$, for the flow ranges:

$$Q_{m,Min}^{Comb} = Q_{m,Min}(B) \le Q_m \le Q_{m,Tranz,Min}(B) \text{ where } k_1^{100\%}(B) = \text{constant,}$$

T he transition zone, $Q_{m,Tranz,Min}(B) < Q_m \le Q_{m,Tranz,Max}(A)$ where the calculation is done incrementally with the related relation of this parameter;

Step 14 - incremental calculation of the $k^{P\%}$ parameter values; both for the flow range

$$Q_{m,Min}^{Comb} = Q_{m,Min}(B) \le Q_m \le Q_{m,Tranz.Min}(B), \text{ where } k_1^{100\%}(B) = \text{constant}, \text{ as well}$$

as for the transition zone, $Q_{m,Tranz,Min}(B) < Q_m \le Q_{m,Tranz,Max}(A)$, by taking the progressive modification of the parameter $k^{100\%}_{1,Tranz}$, ensuring the transition from $k_{Tranz,Min}(Q_{m,Tranz,Min})$ to $k_{Tranz,Max}(Q_{m,Tranz,Max})$ and reciprocally ;

Step 15 - maintaining, also for B Modulation, the same solution adopted by A Modulation, for the Modulation Block (with inner Modulator or with outer Modulator).

Step 16- similar to step 17 of Stage I;

Step 17 - establishing the profile,**characterized by** coordinates $D_M^{P\%} = D_M(A_2^{P\%})$ and $\alpha_M^{P\%}$, of the Modulator (M) and the diameter = constant, of the Pair part (PP)

Step 18- completing the configuration of the Flowmeter with modulated reaction, using the adopted force (moment) sensor,at Stage I, and the configuring of " Modulation Block ", coresponding to transition from " B Modulation" to

" A Modulation" and reciprocally ;.

Step 19 - calculating the turndown of the combination

$$T^{Comb} = Q_{m,Max}^{Comb}/Q_{m,Min}^{Comb} = Q_{m,Max}(A)/Q_{m,Min}(B);$$

Step 20 - validation of the assurance of the condition that the turndown resulting from the combined modulation A/B of reaction is

$$T^{Comb} \geq T_{target}$$

2. Reaction flowmeter implemented through the functional method of the reaction modulation from claim 1, comprising by a Primary Element (EP) and a Secondary Element (ES), where the Primary Element (EP) is composed of a Reference Block (BR) with an immobile inlet connection (1), and a Sensitive Block (BS) having as Reaction Element (ER) a tube ( 2) curved by $90^0$ at its outer end, with which it is freely coupled allowing the rotation of the reaction tube (2) in relation to the inlet connection (1), and respectively the Secondary Element (ES) thatis composed by a bifunctional block (BEMMR) achieving the balancing of the Reaction Moment and the measuring of the reaction moment by a moment transducer, and a Calculation Block (BC) that receives signals from a pressure sensor (13) and a temperature sensor (14) and performis the correction of the flow rate calculation with the pressure and temperature of the measured fluid , **characterized in that** the Sensitive Block (BS), incorporates the Modulation Block (4) configured according to an original approach based on analytics considering a modulation parameter n and designed according to the method from claim 1, defined by the shape of a single modulation curve if according to the stage I of the method, is met the rangeability target of the flowmeter, or defined by the shape of a functional combined modulation curve according to stage II of the method, if additional rangeabiliiy is functionally needed, that could include modulation of both linear and non-linear dependence of the flow rate by the force exerted on the reaction element, where the Modulation Block (4) is integrated in the new configuration of an outlet nozzle (4) of the reaction element (ER), thus functionally becoming a Modulated Reaction Element (ERM), achieved by a fluidic coupling, of two concentric pieces, respectively a Modulator (M) having its specific profile contour and, related to it a Pair Part (PP), with the wall contour having a constant diameter, between the two pieces beeing formed , in the plane of the Pair Part (PP) end,the circular crown with variable area of the outlet nozzle which, depending on th deign of the Modulator (M) has, for the variant with "inner Modulator" as inner wall, immobile, fixed on an outlet connection (5) of the flowmeter through a support (6), and as outer wall a Pair Part (PP) which is itself the inner wall of reaction tube outlet, angular mobile depending on the flow rate, the plane of its end, thus determining the corresponding the Modulator diameter, variable on $Q_m$ or for the variant with "outer Modulator" ,has as outer wall, the Modulator(M) ,angular mobile, belonging the reaction tube (2), and as inner wall the Pair Part (PP) , with constant diameter, immobile,fixed on a outlet connection (5) of flowmeter through a support (6),the plane of Pair Part (PP) end, thus determining the correspondeng Modulator (M) diameter, variable on Q m, for both variants . the variable diameter of the modulator (M) being dependent on the angular position $\alpha_E$ of the outlet nozzle (4), , and implicitly of its outlet area $A_2$, established under the action and proportional to the value of the reaction force $F_R$, corresponding to the current value of the measured flow rate $Q_m$, angle at which, by means of the Balancing Block of the Reaction Moment (BEMMR), it is balanced the reaction moment $M_R$, with the moment $M_E = M_{rR}$ developed by the moment transducer, for extended rangeability and accuracy targets, compared to the technical solutions of known flowmeters,

3. Flowmeter with modulated reaction according to claim 2, **characterized in that** in order to achieve the specific function of modulating the dependence on the flow rate of the force exerted on the reaction element, the modulator (M) is configured as a specially profiled part with a contour defined by the angular position $\alpha_E^{P\%}$ of the nozzle of the reaction element related to stopping the rotation of the reaction tube when the moment sensor balances the reaction moment $M_R^{P\%}$, developing the moment $M_E$, in a plane that contains the outlet variable area

$$A_2^{P\%} = A_2(\alpha_E^{P\%}) = A_2(Qm)\,P\%$$ and respectively the diameter of the modulator

$$D_M^{P\%} = D_M\left(A_2^{P\%}\right)$$ with the value established according to $A_2^{P\%}$, having the analytical relations specific to each of the two variants of its realization, respectively as an inner Modulator (M) or as an outer Modulator (M), so that the parameters defining the contour of the modulator are a function of a modulation parameter "n" and are established incrementally according to the method of claim 1, depending on the target turndown and the measurement precision imposed on the flowmeter.

4. Flowmeter with modulated reaction according to claims 2 and 3, **characterized in that** the Modulator (M) is configured so that its profile can be defined by the parameters angular position $\alpha_E^{P\%}$ and diameter $D_M^{P\%}$ both through a single "A" Modulation, made and implemented based on a single reference functional curve, called "A" Modulation curve, as well as a combined configuration modulation, based on the implementation of a second Modulation "B", in addition to the "A"' Modulation, resulting the functional curve of the flowmeter with combined modulation reaction, by the combination the two reference curves, "A" Modulation, and "B" Modulation,, combined curve being made and implemented for the case that the configuration according to "A" Modulation curve does not allow reaching the turndown target imposed on the flowmeter.

## Patentansprüche

1. Funktionales Verfahren zur Modulation der Abhängigkeit der auf das Reaktionselement ausgeübten Kraft vom Durchfluss in der Struktur eines Durchflussmessers . welche auf den derzeit bekannten Referenzgleichungen basieren auf der für nichtlineare Reaktionsdurchflussmesser, berücksichtigt die Änderung des Parameters k1 in der Abhängigkeit zwischen Massenstrom Qm und der von ihm erzeugten Reaktionskraft $F_R$ beim Durchströmen des Reaktionselements,. von einem konstanten zu einem vom Durchfluss $Q_m$ abhängigen Parameter verändert, und folglich die Änderung der Rolle der Auslassdüse des Reaktionselements: (ER) von einer Düse mit konstantem Querschnitt $A_2$ = ct. zu einer Düse mit variablem Querschnitt $A_2 = A_2(Q_m)$ abhängig von der Durchflussrate, durch die fluidische Kopplung zweier konzentrischer Teile: eines äußeren, beweglichen Teils zusammen mit dem zugehörigen Reaktionsrohr und eines inneren, unbeweglichen Teils, der am Auslassanschluss des Durchflussmessers befestigt ist, ein Verfahren, bei dem ein Sensor zur Messung der Reaktionskraft $F_R$ verwendet wird, oder der zugehörigen Reaktionsmoment, das den Ausgleich und implizit die Messung des Moments $M_R$ gewährleistet, **dadurch gekennzeichnet , dass** zur Erreichung der Ziele der Konfiguration des Durchflussmessers, insbesondere für den erweiterten Turndown bei vorgegebener Genauigkeit, sind ein origineller Modulationsparameter und ein spezifischer globaler Parameter, der den Turndown analytisch berücksichtigt, dadurch lässt sich die Auslasskonfiguration des Reaktionselements über ein neues funktionales und konstruktives Element, den sogenannten "Modulator" (M), modifizieren, die zusammen mit einem Gegenstück (PP) bildet einen Modulationsblock (4), der die funktionale und konstruktive Implementierung entweder als "innerer Modulator" oder als "äußerer Modulator", und ermöglicht. In einer ersten Konfigurationsoption des Durchflussmessers gemäß STUFE I, eine erste Konfiguration des Durchflussmessers basierend auf der Bestimmung seiner Funktionskurve und der impliziten Definition des Modulators, wird durch die Verwendung einer einzelnen Modulation (Modulation A) sichergestellt, und fals der gezielte Turndown nicht erreicht wird, es wird fortgesetzt und in STUFFE II die Konfiguration erreicht. auf Basis einer kombinierten Funktionskurve (Kombinierte Modulation A/B) erreicht, die kombiniert die Kurve der "A-Modulation" mit einer zusätzlichen Kurve der "B-Modulation" durch Ausführung der folgenden logischen Sequenz. STUFE I

Schritt 1 - Festlegung der Referenzdaten: jeweils die maximale Durchflussrate $\boldsymbol{Q_{m,Max}}$, der Zieltarget $Tt_{arget}$, die zulässige Messgenauigkeit $E_{Fpermissible}$ (% o.r.) des Durchflussmessers, Dichte $\rho$ des zu messenden Fluids ;
Schritt 2 - Entsprechend dem Wert von $\boldsymbol{Q_{m,Max,target}} = \boldsymbol{Q_{m,Max}}$ werden (für die Modulationskonfiguration "A") der Nenndurchmesser $D_N$ des Durchflussmessers sowie die Werte der Ein-und Auslassflächen $A_1$ und $A_2$ bestimmt.des Reaktionsrohrs und des Arms $L_R$ der von ihm entwickelten Reaktionskraft;
Schritt 3 - entsprechend dem maximalen Referenzwert $Q_{m.,MaxTarget} = Q_{m,Max}$ (A) der Durchflussrate wird der Maximalwert $F_{R,Max}$ der Reaktionskraft ermittelt und mit dem Wert ihres Arms $L_R$ bzw. dem Maximalwert $M_{R,Max}$ des Reaktionsmoments korreliert;
Schritt 4 - Festlegung des Funktionstyps des Sensors, der zur Messung der Kraft $F_E = F_R$ bzw. des Moments ME verwendet wird, sowie des Gleichgewichts zwischen dem Reaktionsmoment $M_R$ und dem maximal messbaren Wert der Kraft $F_{E,Max}$ (bzw. $M_{E,Max}$), der vom Sensor gemessen werden kann;
Schritt 5 - Festlegung der Messgenauigkeit $E_S$ (% o.f.s.) des Sensors und des Wertes der Kraft $F_{E,Min,r}$ (bzw. des Moments $M_{E,Min}$), die erforderlich sind, um die Messung der Kraft im Bereich $F_{E,Min},.. F_{E,Max}$ zu gewährleisten. bzw. des Moments im Bereich $M_{E,Min},..M_{E,Max}$, mit Genauigkeit $E_{S,Max, admissible}$ (% o.r.) = $E_{FMax, admissible}$ (% o.r);

Schritt 6 - Berechnung des Wertes des Parameters $k_1^{100\,\%}$ entsprechend den Werten der Flächen $A_1$ und $A_2$;

Schritt 7 - Berechnung des Wertes des globalen Parameters $k_2$ (A);

Schritt 8 - Auswahl des Wertes des Modulationsparameters "n", der dem Durchflussmesser die Möglichkeit gibt, den maximalen Durchfluss zu messen, und der Erweiterung T = $Q_{m,Max}$, (A)/$Q_{m,Min}$ (A) des Messbereichs, die optimal nahe am Wert $T_{target}$ liegt;

Schritt 9 - Berechnung der Werte $Q_{m,Min}$(A), die mit dem Durchflussmesser mit modulierter Reaktion unter Verwendung des Parameters "n", der dem globalen Parameter mit dem Wert $k_2$(A) entspricht, und anschließend des prozentualen Gewichts $P_{min}$(%) des minimalen Durchflusses $Q_{m,Min}$ (A) im Vergleich zum Wert des maximalen Durchflusses $Q_{m,Max}$(A);

Schritt 10 - Berechnung der Werte $k_{Min}$ (n) und $k_{Max}$ (n), die den Durchflussraten $Q_{m,Min}$ (A) und $Q_{m,Max}$ (A) in Abhängigkeit vom Wert des Parameters "n" entsprechen;

Schritt 11 - Berechnung der Werte der Flächen $A_{2,Min}$(n) und $A_{2,Max}$ (n);

Schritt 12 - Berechnung der Werte $v_2^{A_{2,Min(n)}}$ v und $v_2^{A_{2,Max(n)}}$ der Strömungsgeschwindigkeit des Fluids durch die Flächen $A_{2,Min}$(n) und $A_{2,Max}$ (n) ;

Schritt 13 - Überprüfung, ob die Strömungsgeschwindigkeit $v_2$( $A_{2,Min}$), an der Austrittsdüse im zulässigen Bereich liegt. Ist dies der Fall, fahren Sie mit Schritt 14 fort; andernfalls wird der Vorgang ab Schritt 2 fortgesetzt.

Schritt 14 - Überprüfung der Bedingung, ob die Geschwindigkeit $v_2$ ($A_{2,Max}$), unterhalb der Kompatibilitätsgrenze liegt, undfFalls diese Bedingung nicht erfüllt ist, wird der Wert des Modulationsparameters "n" entsprechend reduziert und die Prozedur gemäß Schritt 8 fortgesetzt. Ist die Bedingung aus Schritt 14 erfüllt, wird mit Schritt 15 fortgefahren;

Schritt 15 - Festlegen der Konfigurationsvariante des "Modulationsblocks", mit "innerem Modulator" oder mit "äußerem Modulator" ;

Schritt 16 - Berechnung für den Bereich $P_{Min} \leq P(\alpha_E) \leq P_{Max}$, nacheinander, der Parameter: $k^{P\%}(Q_m^{P\%})$ , und

$$A_2^{P\%}(k^{P\%})\ ;$$

Schritt 17 - Festlegung des Profils (charakterisiert durch die Koordinaten $D_M^{P\%} = D_M(A_2^{P\%})$ und $\alpha_M^{P\%}$ des Modulators und den Durchmesser = constant, seines Paarteils;

Schritt 18 - Vervollständigung der Konfiguration des Durchflussmessers mit modulierter Reaktion unter Verwendung der Informationen über den konfigurierten "Modulationsblock" und den verwendeten Kraft-(Momenten-)Sensor;

Schritt 19 - Berechnung des Abschaltwerts von T(A), der durch das oben beschriebene Erreichen der "A"-Modulation erhalten wurde;

Schritt 20 - Prüfung, ob der ermittelte Turndown T(A) über dem Referenzwert Ttarget liegt, und fals dies ist der Fall, fahren Sie mit Schritt 21 fort, andernfalls mit PHASE II;

Schritt 21 - Validierung der erhaltenen Endlösung bzw. Konfiguration mittels Modulation "A", die die "Anfangsreferenzanforderungen" erfüllt,und wenn der ermittelte Turndown T(A) unter dem Referenzwert Ttarget liegt, muss der TurndownT(A), der ausschließlich durch die Modulation "A" erzielt wurde, erhöht und die Reaktionsmodulation in STUFFE II fortgesetzt werden.

STUFE II

Schritt 1 - Es wird festgestellt, dass die Konfigurationsoption des Durchflussmessers (gemäß STUFFE I) den Betrieb des "Durchflussmessers mit modulierter Reaktion" für den Durchflussbereich

$$Q_{m,Max}(A) = Q_{m,Max}^{Comb} \ldots Q_{m,Tranz,Max}(A)\ ;$$

Schritt 2 - Nachweis, dass die zweite Variante (genannt "B Modulation") der Konfiguration die Durchflussmessung im Bereich $Q_{m,Tranz,Min}(B), \ldots Q_{m,Min}(B) = Q_{m,Min}^{Comb}$, mit einer "schmalen Übergangszone" $Q_{m,Tranz,Max}(A) \ldots Q_{m,Tranz,Min}(B)$;

Schritt 3 - Es ist erforderlich, dass der Wert des minimal messbaren Durchflusses $Q_{m,\,Min}$ kleiner ist als der Wert des minimal messbaren Durchflusses $Q_{m,Min}$ (A), der durch "A Modulation" bzw. $Q_{m,Tranz,Max}(A) \ldots Q_{m,Tranz,Min}(B\ ;$

Schritt 4 - Berechnen Sie den entsprechenden Wert des Parameters $k_2$ (B) in Bezug auf die "B-Modulation" mit der Beziehung: $k_2(B) = Q_{m,Min}^{1/n}(B)/M_{Min}\ ;$

Schritt 5 - Berechnung des Wertes des Parameters $k_1^{100\%}$ (B) , entsprechend dem Wert von $k_2$ (B) ;

Schritt 6 - Berechnung des Wertes des Parameters k (Q$_{m,Min}$), entsprechend dem Wert von $k_1^{100\%}$ (B), und dem in SCHRITT 3 ermittelten Mindestdurchfluss;

Schritt 7 - Berechnung des Wertes der Fläche A$_2$ (Q$_{m,Min}$), die dem in SCHRITT 6 ermittelten Wert des Parameters k (Q$_{m,Mim}$) entspricht;

Schritt 8, entsprechend dem Wert der Fläche A$_2$(Q$_{m,Mim}$) und dem Wert der minimalen Durchflussrate Q$_{m.Min}$ (B), wird der Wert der Geschwindigkeit v$_2$ des Fluidstroms durch die kreisförmige Krone mit dieser Fläche an der Auslassdüse des Reaktionselements bestimmt;

Schritt 9 - Überprüfung der Bedingung, ob die Geschwindigkeit v$_2$, die mit dem minimalen Durchfluss Q$_{m.Min}$ (B) zusammenhängt, innerhalb des Kompatibilitätsbereichs liegt, sodass, wenn die Geschwindigkeit NICHT innerhalb des Kompatibilitätsbereichs liegt, das Verfahren aus Schritt 2 von Phase II fortgesetzt wird, und wenn sie passt, zu Schritt 10 übergegangen wird;

Schritt 10 - Zeichnen der Funktionskurven $Q_m(kg/s) = (k_2 \times M_E)^n$ oder $Q_m(kg/h) = 3600 \times (k_2 \times M_E)^n$ der Konfigurationsvarianten (durch A- und B-Modulationen) des Durchflussmessers mit modulierter Reaktion, für den gleichen Wert des Modulationsparameters "n", aber unterschiedliche Werte des Parameters k$_2$,: k$_2$(A) bzw. k$_2$(B);

Schritt 11 Festlegung einer optimalen Positionierung der "Übergangszone" (sehr schmal, mit geringem prozentualem Gewicht) von der Referenzkurve der Funktionsvariante "A Modulation" zur Kurve der Funktionsvariante "B Modulation":

$$Q_m = Q_{m,Tranz\,Max}(A) - Q_{m,Tranz.Min}(B) = (0,015 \ldots 0,025) \times Q_{m,Max}^{Comb} \,;$$

Schritt 12 - Festlegung der prozentualen Gewichtungen in Bezug auf $Q_{m,Max}^{Comb}$ Q der Durchflussraten, die die "Übergangszone" begrenzen;

Schritt 13 - Berechnung des Wertes des Parameters $k_1^{100\%}$(B), entsprechend dem Wert von k$_2$(B), für die

Durchflussbereiche: $\quad Q_{m,Min}^{Comb} = Q_{m,Min}(B) \le Q_m \le Q_{m,Tranz,Min}(B) \quad$ wo

$k_1^{100\%}(B) = konstant$, die Übergangszone $Q_{m,Tranz,Min}(B) < Q_m \le Q_{m,Tranz,Max}(A)$ wobei die Berechnung inkrementell mit der zugehörigen Beziehung dieses Parameters durchgeführt wird;

Schritt 14 - inkrementelle Berechnung der Parameterwerte k$^{P\%}$; sowohl für den Durchflussbereich $Q_{m,Min}^{Comb} = Q_{m,Min}(B) \le Q_m \le Q_{m,Tranz.Min}(B)$,Q, wobei $k_1^{100\%}(B) = Konstante$, sowie für die Übergangszone, $Q_{m,Tranz,Min}(B) < Qm \le Q_{m,Tranz,Max}(A)$, durch schrittweise Modifikation des Parameters $Q_{m,Tranz,Min}(B) < Q_m \le Q_{m,Tranz,Max}(A)$, wodurch der Übergang von k$_{Tranz,Min}$ ($Q_{m,Tranz,Min}$ zu k$_{Tranz,Max}$ ($Q_{m,Tranz,Max}$) und umgekehrt sichergestellt wird;

Schritt 15 - Beibehaltung der gleichen Lösung, die für die Modulation A verwendet wurde, auch für die Modulation B für den Modulationsblock (mit innerem Modulator oder mit äußerem Modulator);

Schritt 16 - ähnlich wie Schritt 17 aus STUFFE I;

Schritt 17 - Festlegung des Profils, charakterisiert durch die Koordinaten $D_M^{P\%} = D_M(A_2^{P\%})$ und $\alpha_M^{P\%}$ des Modulators (M) und den Durchmesser = konstant des Paarteils (PP);

Schritt 18 - Vervollständigung der Konfiguration des Durchflussmessers mit modulierter Reaktion unter Verwendung des verwendeten Kraft- (Momenten-)Sensors in Phase I und Konfiguration des "Modulationsblocks", der dem Übergang von "B-Modulation" zu "A-Modulation" und umgekehrt entspricht;

Schritt 19 - Berechnung des Turndowns der Kombination $T^{Comb} = Q_{m,Max}^{Comb}/Q_{m,Min}^{Comb}$ = Q$_{m,Max}$ (A)/Q$_{m,Min}$ ;

Schritt 20 - Validierung der Sicherstellung, dass die durch die kombinierte Modulation A/B der Reaktion hervorgerufene Absenkung $T^{Comb} \ge T_{target}$ ;

2. Durchflussmesser mit modulierter Reaktion, der auf der Grundlage des Funktionsverfahrens der Reaktionsmodulation nach Anspruch 1 konfiguriert Ist, bestehend aus einem Primärelement (EP) und einem Sekundärelement (ES), wobei das Primärelement (EP) aus einem Referenzblock (BR) mit einem unbeweglichen Einlassanschluss (1) und einem Sensorblock (BS) besteht, der als Reaktionselement (ER) ein am äußeren Ende um 90° gekrümmtes Rohr (2) aufweist, mit dem er frei gekoppelt ist und der die Drehung des Reaktionsrohrs (2) relativ zum Einlassanschluss (1) ermöglicht, und entsprechend das Sekundärelement (ES), das aus einem bifunktionalen Block (BEMMR), der den Ausgleich des Reaktionsmoments und die Messung des Reaktionsmoments mittels eines Momentenaufnehmers realisiert, und einem Berechnungsblock (BC) besteht, der Signale von einem Drucksensor (13) und einem Temperatursensor (14) empfängt und die Korrektur der Durchflussberechnung anhand des Drucks und der Temperatur des gemessenen Fluids durchführt. **dadurch gekennzeichnet , dass** der Sensitivblock (BS) den Modulationsblock (4) enthält, der gemäß einem neuartigen, auf Analysen basierenden Ansatz unter Berücksichtigung eines Modulationsparameters n konfiguriert und gemäß dem Verfahren aus Anspruch 1 entworfen wurde. Dieser Modulationsblock ist durch die Form einer einzelnen Modulationskurve definiert, wenn gemäß Stufe I des Verfahrens das Bereichsziel des Durchflussmessers erreicht wird, oder durch die Form einer funktionalen kombinierten Modulationskurve gemäß Stufe II des Verfahrens, wenn eine zusätzliche Bereichsgenauigkeit erforderlich ist., die die Modulation sowohl der linearen als auch der nichtlinearen Abhängigkeit der Durchflussrate von der auf das Reaktionselement ausgeübten Kraft umfassen kann. Wobei der Modulationsblock (4) ist in die neue Konfiguration einer Auslassdüse (4) des Reaktionselements (ER) integriert und wird dadurch funktional zu einem modulierten Reaktionselement (ERM), die durch eine fluidische Kopplung zweier konzentrischer Teile erreicht wid, eines Modulators (M) mit seiner spezifischen Profilkontur und eines damit verbundenen Paarteils (PP), dessen Wandkontur einen konstanten Durchmesser aufweist. Die Wandkontur zwischen den beiden Teilen wird in der Ebene des Paarteils (PP) gebildet. Ende, die kreisförmige Krone mit variabler Fläche der Auslassdüse, die je nach Ausführung des Modulators (M) bei der Variante mit "innerem Modulator" als Innenwand unbeweglich ist und über eine Halterung (6) an einem Auslassanschluss (5) des Durchflussmessers befestigt ist, und als Außenwand ein Paarteil (PP) aufweist, das selbst die Innenwand des Reaktionsrohrauslasses bildet und je nach Durchflussrate winkelbeweglich ist, wobei die Ebene seines Endes die entsprechende Modulatordurchmesser bestimmt, die von $Q_m$ abhängt, oder bei der Variante mit "äußerem Modulator" als Außenwand den Modulator (M) aufweist. ,winklig beweglich, zum Reaktionsrohr (2) gehörend, und als Innenwand das Paarteil (PP) mit konstantem Durchmesser, unbeweglich, das über eine Halterung (6) an einem Auslassanschluss (5) des Durchflussmessers befestigt ist, die Ebene des Endes des Paarteils (PP) bestimmt somit den entsprechenden Modulatordurchmesser (M), der in beiden Varianten von $Q_m$ variabel ist. Der variable Durchmesser des Modulators (M) hängt von der Winkelposition $\alpha_E$ der Auslassdüse (4) und implizit von ihrer Auslassfläche A2 ab, die unter der Einwirkung der Reaktionskraft FR entsteht und proportional zu deren Wert ist. Dieser Wert entspricht dem aktuellen Wert des gemessenen Durchflusses $Q_m$, wobei diesem Winkel wird mittels des Reaktionsmomentausgleichsblocks (BEMMR) das Reaktionsmoment MR mit dem vom Momentenaufnehmer erzeugten Moment $M_E$ = Mr ausgeglichen, um im Vergleich zu den technischen Lösungen bekannter Durchflussmesser einen erweiterten Messbereich und höhere Genauigkeitsziele zu erreichen.

3. Durchflussmesser mit modulierter Reaktion nach Anspruch 2, **dadurch gekennzeichnet, dass** zur Erzielung der spezifischen Funktion der Modulation der Abhängigkeit der auf das Reaktionselement ausgeübten Kraft von der Durchflussrate der Modulator (M) als speziell profiliertes Teil mit einer Kontur konfiguriert ist, die durch die Winkelposition $\alpha_E^{P\%}$ der Düse des Reaktionselements in Bezug auf den Stopp der Rotation des Reaktionsrohrs definiert ist, wenn der Momentensensor das Reaktionsmoment $M_R^{P\%}$ ausgleicht und das Moment ME entwickelt, in einer Ebene angeordnet, die die variable Auslassfläche $A_2^{P\%} = A_2\left(\alpha_E^{P\%}\right) = A_2(Qm)\,P\%$ und den Durchmesser des Modulators $D_M^{P\%} = D_M\left(A_2^{P\%}\right)$ mit dem Wert gemäß $A_2^{P\%}$ A bestimmt, wobei die analytischen Beziehungen sind für jede der beiden Realisierungsvarianten, als innerer Modulator (M) oder als äußerer Modulator (M), spezifisch. dass die Parameter, die die Kontur des Modulators definieren, eine Funktion eines Modulationsparameters "n" sind und inkrementell nach dem Verfahren nach Anspruch 1 in Abhängigkeit vom angestrebten Regelbereich und der an den Durchflussmesser gestellten Messgenauigkeit festgelegt werden.

4. Durchflussmesser mit modulierter Reaktion nach Anspruch 2 und 3, **dadurch gekennzeichnet, dass** der Modulator (M) so konfiguriert ist, dass sein Profil durch die Parameter Winkelposition $\alpha_E^{P\%}$ und Durchmesser $D_M^{P\%}$ sowohl durch eine einzelne Modulation "A", die auf einer einzelnen Referenzfunktionskurve, der sogenannten Modulationskurve "A", basiert, als auch durch eine kombinierte Konfigurationsmodulation, die auf der Implementierung einer zweiten Modulation "B" zusätzlich zur Modulation "A" basiert, definiert werden kann, die führt zur Funktionskurve des Durchflussmessers mit kombinierter Modulationsreaktion durch die Kombination der beiden Referenzkurven, Modulation "A" und Modulation "B", die für den Fall erstellt und implementiert wird, dass die Konfiguration gemäß Modulationskurve "A" das Erreichen des für den Durchflussmesser vorgegebenen Messbereichs nicht zulässt,

**Revendications**

1. Procede fonctionnel de modulation de la dépendance au débit de la force exercée sur l'élément de réaction dans la structure d'un débitmètre,.qui, basée sur les équations de référence actuellement connues relatives aux débitmètres à réaction non linéaires, prend en compte la modification du rôle du paramètre $k_1$ dans la relation entre le débit massique $Q_m$ et la force de réaction $F_R$ générée lors du passage du fluide à travers l'élément de reaction, d'un paramètre, initialement constant, à un paramètre variable en fonction du débit $Q_m$. et par conséquent une modification du rôle de la buse de sortie de l'élément de réaction (ER), d'une buse à section constante $A_2 = ct$ à une buse à section variable $A_2 = A_2(Q_m)$ en fonction du debit, par couplage fluidique de deux parties concentriques : l'une, extérieure, mobile avec le tube de réaction auquel elle est rattachée et l'autre, intérieure, immobile, fixé au raccord de sortie du débitmètre, une méthode qui implique l'utilisation d'un capteur mesurant la force de réaction $F_R$ ou le moment de réaction associée, qui assure l'équilibrage et implicitement la mesure du moment $M_R$, **caractérise en ce que,** pour atteindre les objectifs de configuration du débitmètre, notamment une plage de réglage étendue pour une précision imposée, sont définis un paramètre de modulation original et un paramètre global spécifique, intégrant analytiquement la plage de réglage, permettant de modifier la configuration de sortie de l'élément de réaction grâce à un nouvel élément fonctionnel et constructif appelé " modulateur " (M), qui, associé à un élément complémentaire (PP), forme un bloc de modulation (4). ce qui permet une implémentation fonctionnelle et constructive soit en tant que " modulateur intérieur ", soit en tant que "modulateur extérieure ", et assure, dans une " première option de configuration" du débitmètre selon le STADE I, une première configuration du débitmètre, basée sur la détermination de sa courbe fonctionnelle, le modulateur étant défini implicitement par l'utilisation d'une modulation unique (modulation A), et ,si la plage de réglage cible n'est pas atteinte, le système se poursuit (STADE II) avec une configuration basée sur une courbe fonctionnelle combinée (modulation combinée A/B), qui combine la courbe de modulation A avec une courbe de modulation B supplémentaire, selon la séquence logique suivante.

   STADE I
   Étape 1 - Établissement des données de référence : respectivement le débit maximal $\boldsymbol{Q_{m,Max}}$, la plage de réglage cible $T_{target}$, la précision de mesure $E_{Fpermissible}$ (% o.r) du débitmètre, la densité $\rho$ du fluide à mesurer $\rho$,
   Étape 2 - Pour la valeur de $\boldsymbol{Q_{m,Max,target}} = \boldsymbol{Q_{m,Max}}$, on détermine (pour la configuration de modulation " A") le diamètre nominal DN du débitmètre et les valeurs des sections d'entrée et de sortie $A_1$ et $A_2$ du tube de réaction et du bras $L_R$ de la force de réaction développée par celui-ci ;
   Étape 3 - correspondant à la valeur de référence maximale $Q_{m.,MaxTarget} = Q_{m,Max}(A)$ du débit, sont établies la valeur maximale $F_{R,Max}$ de la force de réaction et corrélées à la valeur de son bras, $L_R$, respectivement la valeur maximale $M_{R,Max}$ du moment de réaction ;
   Étape 4 - établir le type fonctionnel du capteur utilisé pour mesurer la force $F_E = F_R$, respectivement le capteur mesurant le moment $M_E$, d'équilibrage du moment de réaction $M_R$ et la valeur maximale mesurable de la force $F_{E,Max}$ (respectivement $M_{E,Max}$) mesurable par le capteur ;.
   Étape 5 - détermination de la précision de mesure $E_S$ (% de la valeur mesurée), ou du capteur, et de la valeur de la force $F_{E,Min,r}$ (respectivement du moment $M_{E,Min}$) nécessaire pour assurer la mesure de la force dans la plage $F_{E,Min}..F_{E,Max}$, respectivement du moment, dans la plage $M_{E,Min}..M_{E,Max}$, avec précision $E_{S,Max,}$ admissible (% o.r.) $= E_{FMax,}$ admissible (% o.r)
   Étape 6 - calcul de la valeur du paramètre $k_1{}^{100\%}$ correspondant aux valeurs des aires $A_1$ et $A_2$;
   Étape 7 - calcul de la valeur du paramètre global $k_2$ (A);
   Étape 8 - choisir la valeur du paramètre de modulation " n ", qui assure au débitmètre la possibilité de mesurer le débit maximal, et l'extension $T = Q_{m,Max},(A)/Q_{m,Min}(A)$ de la plage de mesure, de manière optimale proche de la valeur $T_{target}$,
   Étape 9 - calcul des valeurs $Q_{m,Min}(A)$, mesurables par le débitmètre à réaction modulée avec le paramètre " n ", correspondant au paramètre global, avec la valeur $k_2(A)$ puis le pourcentage pondéré $P_{min}(\%)$ du débit minimum $Q_{m,Min}$ (A), par rapport à la valeur du débit maximum $Q_{m,Max}(A)$ ;
   Étape 10 - calcul des valeurs $k_{Min}$ (n) et $k_{max}$ (n), correspondant aux débits $Q_{m,Min}$ (A) et $Q_{m,Max}$ (A), liés à la valeur du paramètre "n",
   Étape 11 - calcul des valeurs des aires $A_{2,Min}(n)$ et $A_{2,Max}$ (n) ;
   Étape 12 - calcul des valeurs $v_2^{A_{2,Min}(n)}$ v et $v_2^{A_{2,Max}(n)}$ de la vitesse d'écoulement du fluide à travers les zones $A_{2,Min}(n)$ et $A_{2,Max}$ (n) ;
   Étape 13 - vérifier que la vitesse du fluide $v_2(A_{2,Min})$,, à travers la buse de sortie, se situe dans la plage de compatibilité, et si la condition est remplie, passer à l'étape 14 ; sinon, reprendre la procédure à partir de l'étape 2:
   Étape 14 - vérifier la condition si la vitesse $v_2^{A2,Max}$ est inférieure à la limite de compatibilité,et si cette condition n'est pas remplie, la valeur du paramètre de modulation "n" est réduite en conséquence et la procédure de l'étape 8 est reprise, si la condition de l'étape 14 est remplie, passez à l'étape 15 :

Étape 15 - établissement de la variante de configuration du " Bloc de modulation ", avec " modulateur intérieure" ou avec "modulateur extérieure";

Étape 16 - calcul pour la plage $P_{Min} \leq P(\alpha_E) \leq P_{Max}$, successivement, des paramètres : $k^{P\%}(Q_m^{P\%})$ , et $A_2^{P\%}(k^{P\%})$ ;

Étape 17 - Établissement du profil (**caractérisé par** les coordonnées $D_m{}^{P\%} = D_M A_2{}^{P\%}$ du modulateur, et le diamètre = constant) de sa partie pairÉtape 18 - finaliser la configuration du débitmètre à réaction modulée, en utilisant les informations concernant le "bloc de modulation " configuré et le capteur de force (moment) adopté ;

Étape 19 - calcul de la valeur de réglage de T(A), obtenue en réalisant ci-dessus la modulation "A " ;

Étape 20 - Vérifier si la valeur de réglage T(A) obtenue est supérieure à la valeur de référence $T_{target}$, et si c'est le cas, passer à l'étape 21 ; sinon, poursuivre avec le STADE II.

Étape 21 - validation de la solution finale obtenue, soit la configuration via la modulation "A", qui satisfait aux " exigences de référence initiales", et si la valeur de réglage T(A) obtenue est inférieure à la valeur de référence $T_{target}$, il est nécessaire d'augmenter cette valeur, obtenue par la modulation "A" seule, et de poursuivre avec le STADE II de la modulation de réaction.

STADE II

Étape 1 - Il est établi que l'option de configuration du débitmètre (conformément à le STADE I) assure le fonctionnement du "débitmètre à réaction module", pour la plage de débit :

$$Q_{m,Max}(A) = Q_{m,Max}^{Comb} \cdots Q_{m,Tranz,Max}(A) :$$

Étape 2 - établir que la deuxième variante (appelée modulation "B ") de configuration assure la mesure du débit, dans la plage : $Q_{m,Tranz,Min}(B), \cdots Q_{m,Min}(B) = Q_{m,Min}^{Comb}$ , avec une " zone de transition étroite" $Q_{m,Tranz,Max}(A) \cdots Q_{m,Tranz,Min}(B)$

Étape 3 - il est requis que la valeur du débit minimal mesurable $Q_{m,Min}$ soit inférieure à la valeur du débit minimal $Q_{m,Min}(A)$, mesurable par modulation "A", respectivement : $Q_{m,Tranz,Max}(A) \cdots Q_{m,Tranz,Min}(B$

Étape 4 : calculer la valeur correspondante du paramètre $k_2$ (B), lié à la modulation "B", selon la relation :

$$k_2(B) = Q_{m,Min}^{1/n}(B)/M_{Min}$$

Étape 5 - calcul de la valeur du paramètre $k_1^{100\%}(B)$ , correspondant à la valeur de $k_2$ (B) ;

Étape 6 - calcul de la valeur du paramètre k ($Q_{m,Min}$), correspondant à la valeur de $k_1^{100\%}(B)$ , et le débit minimum établi à l'étape 3 ;

Étape 7 - calcul de la valeur de l'aire $A_2(Q_{m,Min})$ correspondant à la valeur du paramètre k ($Q_{m,Mim}$) déterminée à l'étape 6 ;

Étape 8, correspondant à la valeur de l'aire $A_2(Q_{m,Mim})$ et à la valeur du débit minimal $Q_{m.Min}$ (B), on détermine la valeur de la vitesse $v_2$ du flux de fluide à travers la couronne circulaire de cette surface, de la buse de sortie de l'Élément de Réaction ;

Étape 9 - vérification de la condition si la vitesse $v_2$, liée au débit minimum $Q_{m.Min}$ (B), se situe dans la plage de compatibilité, de sorte que si la vitesse ne se situe PAS dans la plage de compatibilité, la procédure de l'étape 2 du STAGE II est reprise, et si elle convient, passer à l'étape 10 ;

Étape 10 - traçage des courbes fonctionnelles exprimées $Q_m(kg/s) = (k_2 \times M_E)^n$ ou $Q_m(kg/h) = 3600 \times (k_2 \times M_E)^n$ des variantes de configuration (par modulations A et B) du débitmètre à réaction modulée, pour la même valeur du paramètre de modulation "n", mais des valeurs différentes du paramètre $k_2$, $k_2(A)$, et respectivement $k_2$ (B) ;

Étape 11 établissant un positionnement optimal de la "zone de transition" (qui doit être très étroite, avec un poids en pourcentage mineur), de la courbe de référence de la variante fonctionnelle modulation "A", à la courbe de la variante fonctionnelle modulation "B", respectivement :

$$\Delta Q_m = Q_{m,Tranz\,Max}(A) - Q_{m,Tranz.Min}(B) = (0,015 \ldots 0,025) \times Q_{m,Max}^{Comb}$$

Étape 12 - établir les pondérations en pourcentage, liées à $Q_{m,Max}^{Comb}$ des débits qui limitent la "zone de transition";

Étape 13 - calcul de la valeur du paramètre $k_1^{100\%}(B)$, correspondant à la valeur de $k_2(B)$, pour les plages de débit : $Q_{m,Min}^{Comb} = Q_{m,Min}(B) \leq Q_m \leq Q_{m,Tranz,Min}(B)$ ou $k_1^{100\%}(B) = \text{constant}$, la zone de transition $Q_{m,Tranz,Min}(B) < Q_m \leq Q_{m,Tranz,Max}(A)$, où le calcul est effectué de manière incrémentale avec la relation associée de ce paramètre ;

Étape 14 - calcul incrémental des valeurs du paramètre $k^{P\%}$ ; à la fois pour la plage de débit $Q_{m,Min}^{Comb} = Q_{m,Min}(B) \leq Q_m \leq Q_{m,Tranz.Min}(B)$, ou $k_1^{100\%}(B) = \text{constante}$, ainsi que pour la zone de transition, $Q_{m,Tranz,Min}(B) < Q_m \leq Q_{m,Tranz,Max}(A)$, en prenant la modification progressive du paramètre $Q_{m,Tranz,Min}(B) < Q_m \leq Q_{m,Tranz,Max}(A)$, assurant la transition de $k_{Tranz,Min}(Q_{m,Tranz,Min})$ a $k_{Tranz,Max}(Q_{m,Tranz,Max})$ et réciproquement ;

Étape 15 - maintenir, également pour la modulation "B", la même solution adoptée par la modulation "A", pour le bloc de modulation (avec modulateur intérieure ou avec modulateur extérieure).

Étape 16 - similaire à l'étape 17 du STADE I ;

Étape 17 - établissement du profil, **caractérisé par** les coordonnées $D_M^{P\%} = D_M(A_2^{P\%})$ et $\alpha_M^{P\%}$, du modulateur (M) et le diamètre = constant, de la Partie paire (PP)

Étape 18 - achèvement de la configuration du débitmètre à réaction modulée, en utilisant le capteur de force (moment) adopté, à le STADE I, et la configuration du "bloc de modulation ", correspondant à la transition de la modulation "B" à la modulation "A" et réciproquement ;.

Étape 19 - Calcul du turndown de la combinaison $T^{Comb} = Q_{m,Max}^{Comb}/Q_{m,Min}^{Comb} = Q_{m,Max}(A)/Q_{m,Min}(B)$ ;

Étape 20 - Validation de l'assurance de la condition selon laquelle le turndown résultant de la modulation combinée A/B de la réaction est $T^{Comb} \geq T_{target}$.

2. Débitmètre à réaction modulée configuré sur la base du procédé de modulation de réaction de la revendication 1., comprenant un élément primaire (EP) et un élément secondaire (ES), l'élément primaire (EP) étant composé d'un bloc de référence (BR) avec une connexion d'entrée fixe (1), et d'un bloc sensible (BS) ayant comme élément de réaction (ER) un tube (2) courbé à 90° à son extrémité extérieure, auquel il est librement couplé, permettant la rotation du tube de réaction (2) par rapport à la connexion d'entrée (1), et l'élément secondaire (ES) étant composé d'un bloc bifonctionnel (BEMMR) assurant l'équilibrage du moment de réaction et la mesure du moment de réaction par un transducteur de moment, et d'un bloc de calcul (BC) qui reçoit les signaux d'un capteur de pression (13) et d'un capteur de température (14) et effectue la correction du calcul du débit en fonction de la pression et de la température du fluide mesuré **caractérisé en ce que** le Bloc Sensible (BS) intègre le Bloc de Modulation (4) configuré selon une approche originale basée sur l'analyse d'un paramètre de modulation n et conçu selon le procédé de la revendication 1, défini par la forme d'une courbe de modulation unique si, conformément à le Stade I du procédé, la plage de mesure cible du débitmètre est atteinte, ou par la forme d'une courbe de modulation fonctionnelle combinée, conformément à le Stade II du procédé, si une plage de mesure supplémentaire est fonctionnellement nécessaire, qui peut inclure la modulation de la dépendance linéaire et non linéaire du débit par la force exercée sur l'élément de reaction, ou le Bloc de Modulation (4) est intégré dans la nouvelle configuration d'une buse de sortie (4) de l'élément de réaction (ER), devenant ainsi fonctionnellement un élément de réaction modulé (ERM), réalisé par un couplage fluidique de deux pièces concentriques : un modulateur (M) ayant son profil spécifique et, associé à celui-ci, une partie paire (PP) dont le profil de paroi a un diamètre constant, entre les deux pièces se forme, dans le plan de l'extrémité de la partie paire (PP), une couronne circulaire à diamètre variable. la zone de la buse de sortie qui, selon la conception du modulateur (M), a, pour la variante avec " Modulateur intérieur " comme paroi intérieur, immobile, fixée sur une connexion de sortie (5) du débitmètre par l'intermédiaire d'un support (6), et comme paroi extérieuree une Partie Paire (PP) qui est elle-même la paroi intérieure de la sortie du tube de réaction, mobile angulairement en fonction du débit, le plan de son extrémité déterminant ainsi le diamètre correspondant du modulateur, variable en fonction de $Q_m$ ou pour la variante avec " Modulateur extérieur", a comme paroi extérieuree le modulateur (M), mobile angulaire appartenant au tube de réaction (2), possède une paroi intérieure fixe de diamètre constant, fixée à la sortie (5) du débitmètre par un support (6), le plan de l'extrémité de l'élément PP détermine ainsi le diamètre du modulateur (M), variable en fonction du débit $Q_m$ pour les deux variants, le diamètre variable etent dépend de la position angulaire $\alpha_E$ de la buse de sortie (4), et donc de sa section de sortie $A_2$, établi sous l'action de la force de réaction $F_R$, proportionnelle à la valeur du débit mesuré $Q_m$, et proportionnelle à l'angle auquel le Bloc d'équilibrage du moment de réaction (BEMMR) équilibre le moment de réaction $M_R$ avec le moment $M_E = M_{rR}$ développé par le capteur de moment, conception qui permet d'atteindre des objectifs de plage de mesure et de précision plus élevés que les solutions techniques des débitmètres connus.

**3.** Débitmètre à réaction modulée selon la revendication 2, **caractérisé en ce que,** pour réaliser la fonction spécifique de modulation de la dépendance au débit de la force exercée sur l'élément de réaction, le modulateur (M) est configuré comme une pièce profilée dont le contour est défini par la position angulaire $\alpha_E^{P\%}$ de la buse de l'élément de réaction liée à l'arrêt de la rotation du tube de réaction lorsque le capteur de moment équilibre le moment de réaction $M_R^{P\%}$ développant le moment $M_E$ dans un plan contenant la section de sortie variable

$$A_2^{P\%} = A_2\left(\alpha_E^{P\%}\right) = A_2(Qm)\, P\%$$ et respectivement le diamètre du modulateur $D_M^{P\%} = D_M\left(A_2^{P\%}\right)$ avec la valeur établie selon $A_2^{P\%}$,, ayant les relations analytiques spécifiques à chacune des deux variantes de sa réalisation, respectivement en tant que modulateur intérieure (M) ou en tant que modulateur extérieure (M), de sorte que les paramètres définissant le contour du modulateur sont une fonction d'un paramètre de modulation "n" et sont établies de manière incrémentale selon la méthode de la revendication 1, en fonction de la turndown cible et de la précision de mesure imposée au débitmètre.

**4.** Débitmètre à réaction modulée selon les revendications 2 et 3, **caractérisé en ce que** le modulateur (M) est configuré de manière à ce que son profil puisse être défini par les paramètres de position angulaire $\alpha_E^{P\%}$ et de diamètre $D_M^{P\%}$ à la fois par une seule modulation "A", réalisée et mise en œuvre sur la base d'une seule courbe fonctionnelle de référence, appelée courbe de modulation "A", ainsi que par une modulation de configuration combinée, basée sur la mise en œuvre d'une seconde modulation "B", en plus de la modulation "A ", résultant en la courbe fonctionnelle du débitmètre à réaction de modulation combinée, par la combinaison des deux courbes de référence, modulation " A" et modulation "B", la courbe combinée étant réalisée et mise en œuvre pour le cas où la configuration selon la courbe de modulation "A" ne permet pas d'atteindre la cible turndown imposée au débitmètre.

Fig. 1

**ALGORITHM for**
**CONFIGURATION of the FLOWMETER with MODULATED REACTION**
**(STAGE I)**

STEP 1 ● Establishing the reference data: respectively the maximum flow rate $Q_{m,Max}$ „the target turndown $T_{target}$, , measurement precision $E_{FMax\,permissible}$ (% o.r.), density of the fluid to be measured, ρ;

STEP 2 ● Establishing the nominal diameter DN of the flowmeter, of the areas $A_1$ si $A_2$ and the arm force $L_R$

STEP 3 ● Establishing the *maximum value* $F_{R,Max}$ of the reaction force and of the maximum value $M_{R,Max}$ of the reaction moment

STEP 4 ● Establishing the functional type of the sensor used to measure the force $F_E$, as well as of the maximum measurable force $F_{E,Max}$ $\left(M_{E,Max}\right)$, masurabile by the sensor,.respectively the sensor measuring the moment $M_E$, and its maximum value

STEP 5 ● Establishing the measurement precision of the $E_S$ sensor (% o.f.s), and the value of the force $F_{E,Min}$, respectively of the moment $M_{E,Min}$) necessary to ensure the measurement of the force in the range $F_{E,Min} ... F_{E,Max}$, respectively of the moment, in the range $M_{E,Min} ... M_{E,Max}$, with precision $E_{S,Max,\,premis}$ (% o.r.) = $E_{FMax,\,premis}$ (% o.r.)

STEP 6 ● Calculating the value of the parameter $k_1^{100\%}$ corresponding to the values of areas $A_1$ and $A_2$

STEP 7 ● Calculating of the value of the global parameter $k_2(A)$;

STEP 8 ● Choosing the value of the modulation parameter "n"

STEP 9 ● Calculation of the values $Q_{m,Min}(A)$, corresponding to the global parameter, with the value $k_2(A)$ and then the percentage weight P% of the minimum flow $Q_{m,Min}(A)$, compared to the value of the maximum flow $Q_{m,Max}(A)$;

STEP 10 ● Calculating the values $k_{Min}(n)$ and $k_{Max}(n)$,

STEP 11 ● Calculating the values of the areas $A_{2,Min}(n)$, and $A_{2,Max}(n)$

STEP 12 ● Calculating the values of $v_2^{A2,Min}(n)$ and $v_2^{A2,Max}(n)$

NO
STEP 13 ● $v_2^{A2,Min}$ within compatiblity range ?
YES

NO
Decrease "n" — STEP 14 ● $v_2^{A2,Max}$ < compatibility range?
YES

STEP 15 ● Establishing the configuration variant of the "Modulation Block", with inner or with outer Modulator

STEP 16 ● Corresponding to the incremental division of the maximum angular displacement $\alpha_{E,Max}$ successively calculating for the rang $P_{Min} \le P(\alpha_E) \le P_{Max}$, of the parameters: $k^{P\%}\left(Q_m^{P\%}\right)$ si $A_2^{P\%}\left(k^{P\%}\right)$

STEP 17 ● Incremental setting of:
a) Modulator's profile, (M) characterized by the coordinates: $D_M^{P\%} = D_M(A_2^{P\%})$ si $\alpha_M^{P\%}$, b) diameter of the pair part (PP) = constant

STEP 18 ● Completion of the remaining of the configuration of the modulated reaction flowmeter, using those above established for "Modulation Block' and the adopted force(moment) sensor

STEP 19 ● Calculating of the value of turndown T(A) achievable by the ' A modulation", $T(A) = Q_{m,Max}(A)/Q_{m,Min}(A)$

NO
STEP 20 ● $T(A) \ge T_{target}$?
YES

STEP 21 ● Validation if "A modulation" configuration meets the "initial reference requirements"

STOP

Increase the value of turndown T(A)

Stage II

**ALGORITHM - Stage II**

STEP 1 ● Establishing that, the flowmeter variant, previously configured - according to Stage I (called "A Modulation"), ensures the operation of the "modulated reaction flowmeter", for the flow range: $Q_{m,Max}(A) = Q_{m,Max}^{Comb} \dots Q_{m,Tranz.t.Max}(A)$

$\downarrow$

STEP 2 ● Establishing that, a second variant (called "B Modulation") of configuration, achieved by maintaining the same value of the modulation parameter "n", as well as the performance and configuration of the flowmeter as a whole, related to "A Modulation"), to ensure the flow rate measurement, within the range : $Q_{m,Tranz,Min}(B) \dots Q_{m,Min}(B) = Q_{m,Min}^{Comb}$, as well as a "narrow transition zone" $Q_{m,Tranz,Max}(A) \dots Q_{m,Tranz,Min}(B)$

$\downarrow$

STEP 3 ● Required that $Q_{m,Min}(B). \leq Q_{m,Max}(A)/T_{Target}$

$\downarrow$

STEP 4 ● Calculating the value $k_2(B) = Q_{m,Min}^{1/n}(B)/M_{Min}$, where $M_{Min}$ corresponds to $Q_{m,Min}$ with accuracy $E_{S,Max}$(%o.r.)=$E_{F,Max}$(%o.r.)

$\downarrow$

STEP 5 ● Calculating the parameter $k_1^{100\%}(B)$, corresponding to the value of $k_2$(B)

$\downarrow$

STEP 6 ● Calculating the value of the parameter $k$ ($Q_{m,Min}$),corresponding to the value of $k_1^{100\%}(B)$, and to the minimum flow rate previously established

$\downarrow$

STEP 7 ● Calculating the value of the aria $A_2$ ($Q_{m,Min}$), corresponding to the parameter $k$ ($Q_{m,Min}$)

$\downarrow$

STEP 8 ● Determining the value of the velocity $v_2$ corresponding to the aria $A_2$ ($Q_{m,Min}$) and to the flow rate $Q_{m,Min}$ (B)

$\downarrow$

NO     STEP 9 ● $v_2$ within compatibility range?

$\downarrow$ YES

STEP ● 10 Comparatively correlated plotting of functional curves, expressed $Q_m(kg/s) = (k_2 \times M_E)^n$ or
Or $Q_m(kg/h) = 3600 \times (k_2 \times M_E)^n$ ,of the two configuration options (modulation A and B) for the same modulation parameter "n", but different values of the parameter $k_2$, respectively: $k_2$ (A), and $k_2$ (B).

$\downarrow$

STEP 11 ● Establishing an optimal positioning of transition, to obtain a very narrow "transition zone", from the curve related to the functional variant A, configured previously, to the curve related to the functional variant B, ensuring a smooth transition through a narrow transition zone of 1.5 - 2.5 % of $Q_{m,Max}^{Comb}$

$\downarrow$

STEP 12 ● Establishing the percentage weights of the flow rates that limit the "transition zone" $\Delta P_{Tranz}^\% = P_{Tranz\,Max}^\% - P_{Tranz,Min}^\%$

$\downarrow$

STEP 13 ● Calculating the value of the parameter $k_1^{(100\%)}$, corresponding to the value of $k_2$ (B)
a. For flow rate range $Q_{m,Min}^{Comb} = Q_{m,Tranz,Min}(B) \leq Q_m \leq Q_{m,Tranz,Min}(B)$, where $k_1^{100\%}(B)$ = constant
b. For transition zone, $Q_{m,Tranz,Min}(B) < Q_m \leq Q_{m,Tranz,Max}(A)$, where $k_{1,Tranz}^{100\%}$, incrementally calculated with related relation

$\downarrow$

STEP 14 ● Incremental calculating (with increment $\Delta P$) of the values of the parameter $k^{P\%}$
a. For flow rate range $Q_{m,Min}^{Comb} = Q_{m,Tranz,Min}(B) \leq Q_m \leq Q_{m,Tranz,Min}(B)$, corresponding to $k_1^{100\%}(B)$ = constant
b. For transition zone, $Q_{m,Tranz,Min}(B) < Q_m \leq Q_{m,Tranz,Max}(A)$, where $k^{P\%}$ incrementally calculated with related relation

$\downarrow$

STEP 15 ● Maintaining the same solution for the Modulation Block (with inner Modulator or with outer Modulator)

$\downarrow$

STEP 16 ● similar Step 17 of Stage I

$\downarrow$

STEP 17 ● The moment sensor participates, functionally, in the rigorous realization of the transition from A Modulation to B Modulation B and vice versa

$\downarrow$

STEP 18 ● Completing the configuration of the Flowmeter with modulated reaction, using those established previously , regarding configuring of the "Modulation Block", and the adopted Force (Moment) Sensor

$\downarrow$

STEP 19 ● Calculating $T^{Comb} = Q_{m,Max}^{Comb}/Q_{m,Min}^{Comb} = Q_{m,Max}(A)/Q_{m,Min}(B)$

$\downarrow$

STEP 20 ● Validating: $T^{Comb} \geq T_{target}$

Fig 2

Fig. 3

Fig. 4

$$\Delta Q_{m,Traz} = \frac{148 - 28}{5.475} \times 100 = 2,2\%$$

Fig. 5a

Fig. 5b

## REFERENCES CITED IN THE DESCRIPTION

**Patent documents cited in the description**

- EP 23020258
- EP 4001856 A
- WO 9702470 A1

**Non-patent literature cited in the description**

- **HORIA MIHAI MOTIT**. A method of flow measurement based on a reaction force. Reaction flowmeters. *FLOMEKO 2019 18th International Flow Measurement Conference*, 26 June 2019
- **HORIA MIHAI MOTIT**. Fundamentals of reaction flowmeters. CRC Press/ Taylor & Francis Group, 2022